(19) Europäisches Patentamt
European Patent Office
Office européen des brevets

(11) Numéro de publication : **0 418 118 B1**

# (12) FASCICULE DE BREVET EUROPEEN

(45) Date de publication du fascicule du brevet : **02.02.94 Bulletin 94/05**

(51) Int. Cl.$^5$ : **C08F 8/34,** C08C 19/30, C08G 75/00

(21) Numéro de dépôt : **90402427.0**

(22) Date de dépôt : **04.09.90**

## (54) Polymères à groupements disulfure de thiurame et leur préparation.

(30) Priorité : **14.09.89 FR 8912061**

(43) Date de publication de la demande : **20.03.91 Bulletin 91/12**

(45) Mention de la délivrance du brevet : **02.02.94 Bulletin 94/05**

(84) Etats contractants désignés : **AT BE CH DE DK ES FR GB GR IT LI LU NL SE**

(56) Documents cités : **FR-A- 1 091 317**

(56) Documents cités : **JOURNAL OF POLYMER SCIENCE, POLYMER CHEMISTRY EDITION. vol. 27, mai 1989, NEW YORK US pages 1795 - 1809; C.P.REGHUNADHAN NAIR: "Functionalization of PMMA by a functional "Iniferter":Kinetics of polymerization of MMa using N,N'-diethyl-N,N'-bis(2-Hydroxyethyl)"**

(73) Titulaire : **ATOCHEM**
**4, Cours Michelet La Défense 10 Cédex 42**
**F-92091 Paris La Défense (FR)**

(72) Inventeur : **Clouet, Gilbert**
**6, rue des Jardins**
**F-67610 La Wantzenau (FR)**

EP 0 418 118 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention porte sur des polymères renfermant au moins un groupement disulfure de thiurame dans leur chaîne principale. Ces polymères constituent des agents ayant la triple fonction d'initiateur, d'agent de transfert de chaîne et d'agent de terminaison dans la polymérisation radicalaire des monomères vinyliques. De tels agents sont couramment désignés par l'abréviation « iniferter ». Dans la présente invention, on utilisera le terme « macroiniferter » pour désigner ces polymères iniferters comportant un seul groupement disulfure de thiurame dans leur chaîne principale, et le terme « polyiniferter » pour désigner ces polymères iniferters comportant plus d'un groupement disulfure de thiurame dans leur chaîne principale.

L'invention porte également sur l'obtention de ces macro- et polyiniferters à partir de polymères acryliques, diéniques ou de type polyoxyalkylène terminés respectivement à une extrémité ou aux deux extrémités de leur chaîne par un groupement amine.

L'invention porte également sur les copolymères séquencés qui peuvent être obtenus à partir de ces macro- et polyiniferters, et qui comportent des séquences vinyliques ou diéniques.

Dans le cas où les macro- ou polyiniferters de l'invention portent des groupements phosphorés, les polymères séquencés correspondants sont utiles pour constituer ou pour entrer dans la constitution de matériaux ignifugés.

La présente invention résulte de nouveaux développements des recherches dans le domaine de la polymérisation radicalaire à l'aide, comme iniferters, de composés comportant un ou des groupes disulfure de thiurame, les séquences polymériques vinyliques ou diéniques s'insérant entre les deux soufres d'un groupe thiurame. L'invention permet d'obtenir des polymères vinyliques séquencés constitués par des séquences dures en alternance avec des séquences molles, ou encore des séquences hydrophiles en alternance avec des séquences hydrophobes (copolymères amphiphiles).

La présente invention a donc d'abord pour objet un polymère renfermant au moins un groupement disulfure de thiurame dans sa chaîne principale et représenté par la formule :

$$[P_1-(S-D)_p-A-\underset{\underset{S}{\|}}{C}-S-]_2- \qquad (I)\ ;$$

ou

$$-[-S-\underset{\underset{S}{\|}}{C}-A-[-\underset{\underset{S}{\|}}{C}-S-]_p-P_2-[-S-\underset{\underset{S}{\|}}{C}-]_p-A-\underset{\underset{S}{\|}}{C}-S]_n- \qquad (II)$$

où :

- $P_1$ et $P_2$ représentent chacun une séquence polymère issue d'au moins un monomère choisi parmi les monomères vinyliques et diéniques, auquel cas p vaut 1, ou bien une séquence polymère choisie parmi les séquences polyoxyalkylène, polyester ou polyamide, auquel cas p vaut 0 ;
- A représente :

  (1) un reste

$$\underset{\underset{R_1}{|}}{-N-},$$

  $R_1$ représentant un groupe alkyle, linéaire ou ramifié, comprenant éventuellement au moins un hétéroatome et/ou au moins un reste

$$\underset{\underset{R_2}{|}}{-N-}$$

  ou

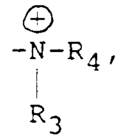

($R_2$, $R_3$ et $R_4$ représentant chacun un groupe alkyle, cycloalkyle ou aryle) et portant éventuellement au moins un groupement fonctionnel;
cette signification (1) de A valant pour la formule (I) sauf si $P_1$ est une séquence polyamide ou une séquence polyester issue d'un polyester terminé par une fonction acide ou ester, ainsi que pour la formule (II), mais seulement si $P_2$ est une séquence polyoxyalkylène ou une séquence polyester issue d'un polyester terminé par des fonctions OH ;
(2) un reste

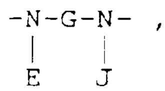

où :
- G représente :
  . un reste $-(CR_5R_6)_a-$, avec $R_5$ et $R_6$ représentant chacun, indépendamment l'un de l'autre, hydrogène ou un reste alkyle, lequel comprend éventuellement au moins un hétéroatome et/ou au moins un reste

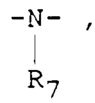

  $R_7$ étant choisi parmi les groupes alkyle, cycloalkyle et aryle, et a représentant un nombre entier de 1 à 6 ; ou
  . le reste d'un cycle aliphatique pouvant renfermer au moins un hétéroatome ;

E et J représentent indépendamment l'un de l'autre un groupe alkyle, comprenant éventuellement au moins un hétéroatome et/ou au moins un reste

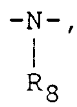

$R_8$ étant choisi parmi les groupes alkyle, cycloalkyle et aryle ; un groupe cycloalkyle ; un groupe aryle; -K-L, K représentant une simple liaison; un groupe alkylène comprenant éventuellement un hétéroatome et/ou au moins un reste

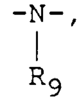

$R_9$ étant choisi parmi les restes alkyle, cycloalkyle ou aryle ; un groupe cycloalkylène ; ou un groupe arylène ; et L représente un groupement fonctionnel, chacun des groupes E, J, $R_6$ et $R_9$ pouvant porter au moins un groupement fonctionnel, E et J du groupe

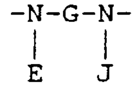

pouvant être réunis pour constituer un hétérocyle azoté ; le groupe

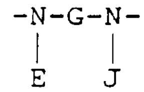

pouvant également représenter :

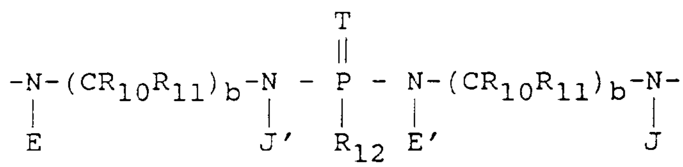

ou

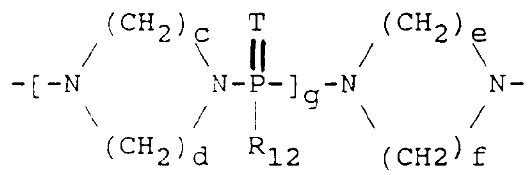
,

avec :

- b représentant un nombre entier de 1 à 12 ;
- $R_{10}$ et $R_{11}$ représentant chacun, indépendamment l'un de l'autre, hydrogène ou un reste alkyle en $C_1$-$C_{12}$, ledit reste alkyle comprenant éventuellement au moins un hétéroatome et/ou au moins un reste

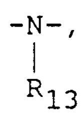
,

  $R_{13}$ étant choisi parmi les groupes alkyle, cycloalkyle et aryle ;
- E' et J' ayant respectivement les mêmes significations que E et J ;
- T représentant un atome d'oxygène ou de soufre, et =T pouvant être absent ;
- $R_{12}$ représentant un groupe alkyle ou alcoxy en $C_1$-$C_{12}$, cycloalkyle ou cycloalcoxy en $C_3$-$C_{12}$, aryle ou aryloxy, ces groupes pouvant porter des substituants ;
- c, d, e et f représentant chacun indépendamment un nombre entier de 1 à 3 ;
- g représentant un nombre entier de 10 à 40 ;

(3) A pouvant également représenter, dans la formule (I), lorsque $P_1$ représente une séquence vinylique ou diénique, un reste

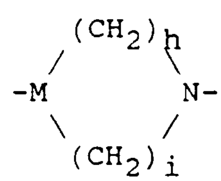

où :

- M, relié à D, représente

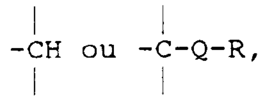

Q représentant une simple liaison ou un groupement alkylène, cycloalkylène ou arylène et R représentant COOH, $COOR_{14}$ ($R_{14}$ représentant alkyle, cycloalkyle ou aryle), OH, un groupement phosphoré, -CN, ou un reste imine -

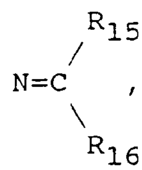

avec $R_{15}$ et $R_{16}$ représentant chacun indépendamment un groupement aromatique en $C_6$-$C_{10}$, un groupement cycloaliphatique en $C_5$-$C_{10}$ ou un groupement aliphatique en $C_1$-$C_6$ ; et

- h et i représentent chacun un nombre entier de 1 à 3 ;

- D représente une simple liaison ou bien un groupement alkylène, cycloalkylène ou arylène, D ne pouvant représenter qu'une simple liaison dans le cas où M représente CH ;

- n vaut de 1 à 20, notamment de 2 à 10.

Les polymères de formule (II) sont cyclisés sur eux-mêmes, ou non. Dans ce dernier cas, la formule (II) s'écrit :

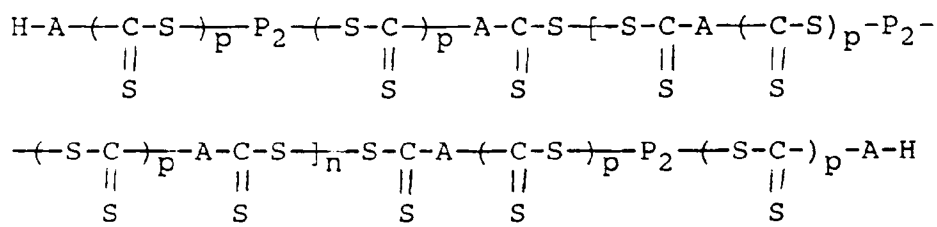

Comme monomères vinyliques, on peut citer les méthacrylates et acrylates d'alkyle, dont le groupe alkyle comporte, par exemple, de 1 à 8 atomes de carbone, les hydrocarbures vinylaromatiques, les nitriles insaturés, les acrylates de cyanoéthyle, l'acrylamide, les acrylates et méthacrylates d'hydroxyalkyle inférieurs, l'acide acrylique et l'acide méthacrylique, l'anhydride maléique et les maléimides substitués par des groupes alkyle ou aryle. En particulier, on peut mentionner les méthacrylates de méthyle, d'éthyle, d'isopropyle, de n-butyle, de tert.-butyle, les acrylates de méthyle, d'éthyle, de n-propyle, de n-butyle, de n-hexyle, d'éthyl-2 hexyle, d'isopropyle, d'isobutyle et de tert.-butyle, le styrène, l'alphaméthylstyrène, le monochlorostyrène, le tertiobutylstyrène, le vinyltoluène, la vinyl-2 pyridine et la vinyl-4 pyridine.

Comme monomères diéniques, on peut mentionner, entre autres, le butadiène, l'isoprène, le 1,3-pentadiène, le 1,4-pentadiène, le 1,4-hexadiène, le 1,5-hexadiène, le 1,9-décadiène, le 5-méthylène-2-norbornène, le 5-vinyl-2-norbornène, les 2-alkyl-2,5-norbornadiènes, le 5-éthylidène-2-norbornène, le 5-(2-propényl)-2-norbornène, le 5-(5-hexényl)-2-norbornène, le 1,5-cyclooctadiène, le bicyclo [2,2,2] octa-2,5-diène, le cyclopentadiène, le 4,7,8,9-tétrahydroindène et l'isopropylidène tétrahydroindène.

La séquence polyalkylène $P_1$ peut être choisie parmi les séquences des formules :

$R_{17}-O-(CH_2-CH_2-O)_j-CH_2-CH_2-$

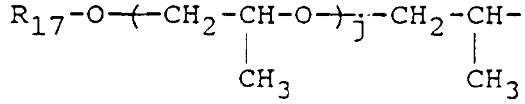

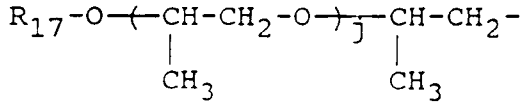

$R_{17}-O-((CH_2)_4-O)_j-(CH_2)_4-$

où :

- $R_{17}$ représente un reste alkyle, cycloalkyle ou aryle ; et
- j vaut de 1 à 1000, de préférence, de 1 à 200.

La séquence polyester $P_1$ est notamment une séquence choisie parmi :

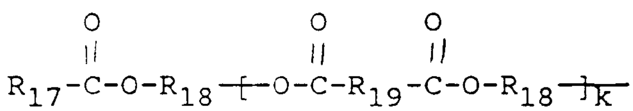

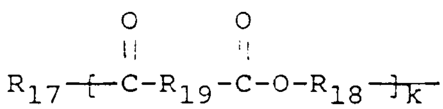

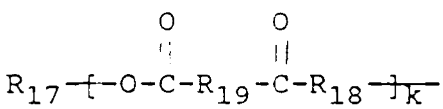 ; et

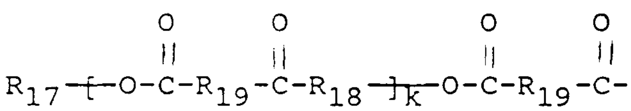

où :

- $R_{17}$ est tel que défini ci-dessus ;
- $R_{18}$ et $R_{19}$ représentent chacun indépendamment un reste alkylène, cycloalkylène, arylène, alcénylène, arylène substitué par alcényle, ces restes pouvant comprendre au moins un hétéroatome et/ou au moins un reste

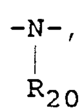,

$R_{20}$ étant choisi parmi les groupes alkyle, cycloalkyle et aryle, et pouvant comporter des substituants ; et

- k vaut de 1 à 300, de préférence, de 1 à 50.

On peut mentionner, comme exemples de restes $R_{18}$ et $R_{19}$ qui comportent au moins une insaturation, les restes:

. $-CH_2-CH=CH-CH_2-$

.

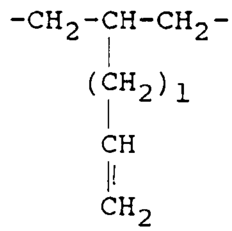

l valant de 1 à 22

.

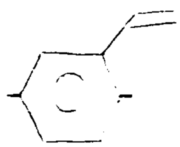 ; 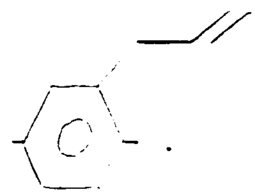 .

La séquence polyamide $P_1$ est notamment une séquence :

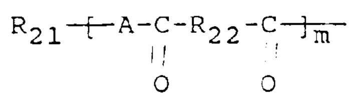

ou une séquence :

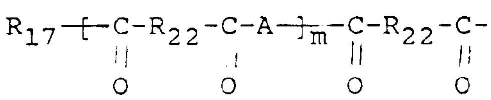 ,

où :

- $R_{21}$ représente $R_{17}$ ou

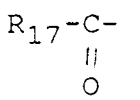 ;

et

- $R_{22}$ a la même définition que $R_{18}$ ou $R_{19}$.
- m vaut de 1 à 300, de préférence, de 1 à 50.

Quant à la séquence polyoxyalkylène $P_2$, elle peut être choisie parmi les séquences des formules :

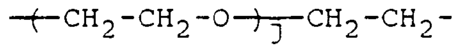

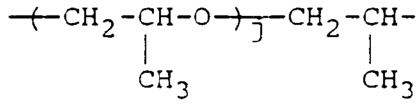

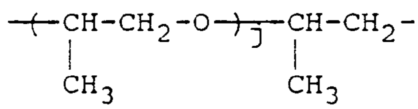

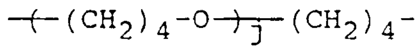

j valant de 1 à 1000, de préférence de 1 à 200.

La séquence polyester $P_2$ est notamment une séquence de formule :

- 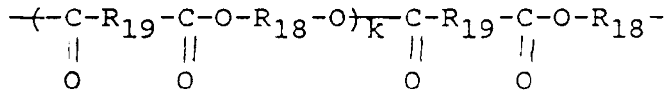
- 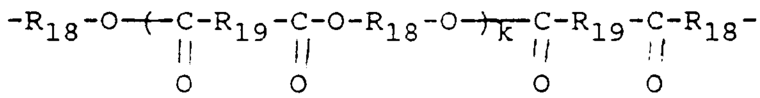
- 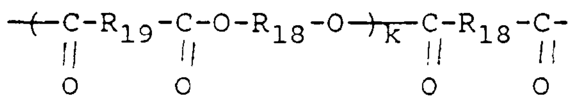

$R_{18}$, $R_{19}$ et k étant tels que définis ci-dessus.

La séquence polyamide $P_2$ est notamment une séquence de formule :

- 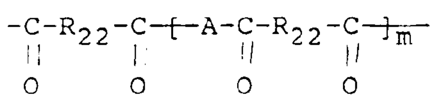

$R_{22}$ et m étant tels que définis ci-dessus.

Les groupes alkyle entrant dans la définition des formules (I) et (II) ci-dessus sont notamment des groupes alkyle en $C_1$-$C_{12}$, en particulier en $C_1$-$C_6$. Les groupes cycloalkyle sont notamment des groupes cycloalkyle en $C_3$-$C_{12}$, en particulier en $C_5$-$C_7$ ; et les groupes aryle sont, par exemple, les groupes phényle ou naphtyle. Les hétéroatomes sont notamment O ou S. Par ailleurs, lorsqu'on indique qu'un groupe peut signifier un reste alkyle, cycloalkyle ou aryle, ou un reste alkylène, cycloalkylène ou arylène, on entend également les combinaisons d'au moins deux de ces restes, par exemple un reste aralkyle et alkaryle.

Les groupements fonctionnels portés par $R_1$, E, J, $R_8$ et $R_9$ ou bien les groupements fonctionnels entrant dans la définition de L sont choisis parmi les groupes :

- OH ;
- $OR_{23}$, $R_{23}$ représentant un groupe alkyle, cycloalkyle ou aryle ;
- COOH ;
- $COOR_{24}$, $R_{24}$ représentant un groupe alkyle, cycloalkyle ou aryle ;
- $Si(R_{25})_2H$, $R_{25}$ représentant un groupe alkyle, cycloalkyle, alcoxy, aryle, aryloxy ;
-

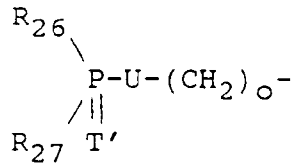

dans lequel :

- $R_{26}$ et $R_{27}$, identiques ou différents, représentent chacun un groupe alkyle, alcoxy, cycloalkyle, cycloalcoxy, aryle, aryloxy,

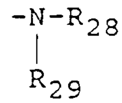

  ($R_{28}$ et $R_{29}$ représentant chacun indépendamment alkyle, cycloalkyle ou aryle), les groupement $R_{26}$, $R_{27}$, $R_{28}$ et $R_{29}$ pouvant être substitués chacun par au moins un atome d'halogène ;
- T' représente un atome d'oxygène ou de soufre ;
- U représente une simple liaison, ou -O- ou encore

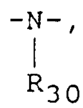

  $R_{30}$ étant choisi parmi les groupes alkyle, cycloalkyle ou aryle ;
- o va de 0 à 12 ;

- CN
-

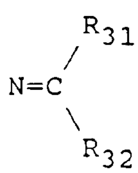,

$R_{31}$ et $R_{32}$ représentant chacun un groupement aromatique en $C_6$-$C_{10}$, un groupement cycloaliphatique en $C_5$-$C_{10}$ ou un groupement aliphatique en $C_1$-$C_6$.

G peut représenter, entre autres, un reste - $(CH_2)_q$-, q valant de 1 à 6, ou un reste

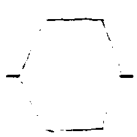, 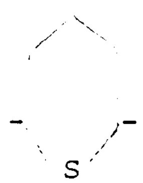, 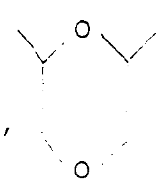 ou 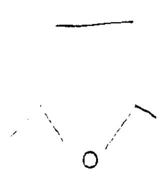 ;

le groupement

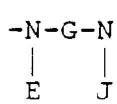

peut représenter, entre autres,

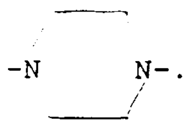

La présente invention a également pour objet un procédé de préparation du polymère de formule (I), $P_1$ représentant une séquence polymère issue d'au moins un monomère $M_1$ choisi parmi les monomères vinyliques et diéniques, caractérisé par le fait que :

- dans une première étape, on conduit la polymérisation radicalaire du monomère $M_1$, en présence d'au moins un initiateur de radicaux libres et d'au moins un agent de transfert de formule :

$$HS\text{-}D\text{-}A\text{-}H \qquad (III)$$

ou

$$HS\text{-}D\text{-}\overset{\oplus}{A}H_2\overset{\ominus}{X} \qquad (III')$$

dans laquelle D et A sont tels que définis ci-dessus, et x représente halogène, l'hydrogène du groupement amine secondaire terminal pouvant être remplacé par un groupement de protection tel que -$Si(R_{33})_3$, $R_{33}$ représentant alkyle, aryle ou cycloalkyle,

ce qui conduit au polymère terminé par un groupement amine de formule :

$$P_1\text{-}S\text{-}D\text{-}AH \qquad (IV)$$

ou

$$P_1\text{-}S\text{-}D\text{-}\overset{\oplus}{A}H_2\overset{\ominus}{X} \qquad (IV')$$

- dans une seconde étape, au besoin après régénération de l'amine secondaire, par exemple par hydrolyse, on fait réagir le polymère (IV) ou (IV') avec le disulfure de carbone en présence d'au moins un agent oxydant ou en ajoutant cet agent après la réaction.

A la première étape de ce procédé, on conduit la polymérisation, soit en masse, soit en milieu solvant, à une température comprise, par exemple, entre environ 30 et 160°C. Le solvant est notamment choisi parmi ceux capables de solubiliser la chaîne de polymère, par exemple, le tétrahydrofuranne, le toluène, l'éthanol et leurs mélanges.

L'agent oxydant utilisé à la seconde étape est choisi, par exemple, parmi l'iode, l'eau oxygénée, les hypochlorites de métaux alcalins et les hydroperoxydes d'alkyle et d'aryle.

Dans cette seconde étape, on peut utiliser un rapport sensiblement équimolaire du polymère (IV) ou (IV') à $CS_2$, la réaction pouvant être effectuée en présence d'une amine tertiaire (par exemple, la pyridine ou la triéthylamine), à raison d'environ 1 mole par mole du polymère (IV) ou d'environ 2 moles par mole du polymère (IV'). L'agent oxydant est ajouté,par exemple, à raison d'environ 1 mole par mole de $CS_2$.

La réaction de cette seconde étape est exothermique et on en contrôle l'exothermicité par tout moyen connu. Par ailleurs, elle est effectuée de préférence en milieu solvant, $CS_2$ pouvant quant à lui, faire office de solvant.

L'invention porte également sur des polymères de formule :

$$P_1\text{-}S\text{-}D\text{-}AH \qquad (IV)$$

ou

$$P_1\text{-}S\text{-}D\text{-}\overset{\oplus}{A}H_2\overset{\ominus}{X} \qquad (IV')$$

dans laquelle :

- $P_1$ est une séquence polymère vinylique ou diénique ; et
- D, A et X sont tels que définis ci-dessus ;

l'hydrogène du groupement amine secondaire terminal pouvant être remplacé par un groupement

de protection comme indiqué ci-dessus ;

et sur leur procédé de préparation consistant à conduire la polymérisation du monomère vinylique ou diénique $M_1$ en présence d'au moins un initiateur de radicaux libres et d'au moins un agent de transfert de formule :

$$HS\text{-}D\text{-}AH \quad (III)$$

ou

$$HS\text{-}D\text{-}\overset{\oplus}{A}H_2\overset{\ominus}{X} \quad (III')$$

dans laquelle D, A et X sont tels que définis ci-dessus.

L'invention porte également sur un procédé de préparation du polymère de formule (II), $P_2$ représentant une séquence polymère issue d'au moins un monomère $M_2$ choisi parmi les monomères vinyliques et diéniques, caractérisé par le fait que :

- dans une première étape, on fait réagir un composé de formule :

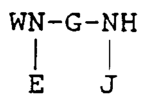 (V) ou 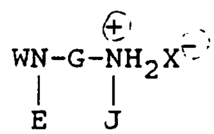 (V')

dans laquelle :

- W est un groupement de protection, tel que $-Si(R_{34})_3$, $R_{34}$ représentant alkyle, aryle ou cycloalkyle ;
- E, G et J ou

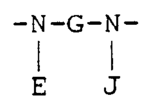

sont tels que définis ci-dessus ; et

- X représente halogène,

avec le disulfure de carbone, en présence d'au moins un agent oxydant ou en ajoutant cet agent après la réaction, puis on hydrolyse le produit obtenu, ce qui conduit au composé de formule :

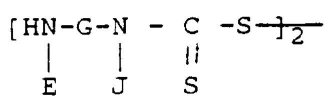 (VI) ;

- dans une seconde étape, on conduit la polymérisation du monomère $M_2$ en présence du composé (VI), pour obtenir le polymère de formule :

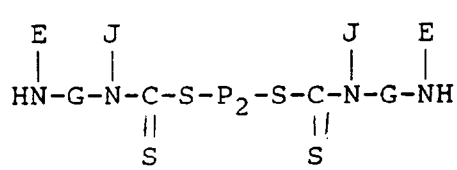 (VII) ;

et

- dans une troisième étape, on fait réagir le polymère (VII) avec le disulfure de carbone, en présence d'au moins un agent oxydant ou en ajoutant cet agent après la réaction.

A la première étape, on peut utiliser un rapport sensiblement équimolaire du composé (V) ou (V') à $CS_2$, la réaction pouvant être effectuée en présence d'une amine tertiaire, à raison d'environ 1 mole par mole du composé (V) ou d'environ 2 moles par mole de composé (V'). L'agent oxydant est ajouté, par exemple, à raison d'environ 1 mole de $CS_2$.

A la seconde étape, on conduit la polymérisation, soit en masse, soit en milieu solvant, celui-ci étant notamment choisi parmi ceux capables de solubiliser le composé (VI), par exemple, le toluène, le tétrahydrofuranne, l'éthanol et leurs mélanges, à une température comprise entre environ 30 et 160°C.

A la troisième étape, on utilise de préférence un rapport molaire du composé (VII) à $CS_2$ qui est sensiblement de 1 à 2, la réaction pouvant être effectuée en présence d'une amine tertiaire, à raison d'environ 1 mole par mole de $CS_2$. L'agent oxydant est ajouté, par exemple, à raison d'environ 1 mole par mole de $CS_2$.

La présente invention porte également sur un procédé de fabrication du polymère de formule (I), $P_1$ représentant une séquence polyoxyalkylène ou une séquence polyester issue d'un polyester terminé par une fonction alcool, caractérisé par le fait que :

- dans une première étape, on fait réagir un polymère de formule :

  $P_1$-OH (VIII)

  avec un agent halogénant, par exemple un agent de chloration, tel que le brome, l'iode, le chlore ou leurs composés organiques, tels que $SOCl_2$ pour obtenir un polymère de formule :

  $P_1$-Hal (IX)

  où Hal représente halogène ;
- dans une seconde étape, on fait réagir le polymère (IX) avec un excès du composé de formule :

  H-A-H (X) ;

  ou

  $$\overset{\oplus}{H}AH_2\ X^{\ominus} \quad (X')$$

  si A a la signification (1) ; ou

  $$X^{\ominus}{}_2H\overset{\oplus}{A}H_2X^{\ominus} \quad (X'')$$

  si A a la signification (2),
  où A et X sont tels que définis ci-dessus ; ou avec un composé de formule :

  $$W-\underset{E}{\underset{|}{N}}-G-\underset{J}{\underset{|}{N}}H \quad (V) \qquad \text{ou} \qquad W-\underset{E}{\underset{|}{N}}-G-\underset{J}{\underset{|}{\overset{\oplus}{N}}}H_2X^{\ominus} \quad (V')$$

  auquel cas le produit résultant est hydrolysé après sa formation,
  ce qui conduit au polymère de formule :

  $P_1$-AH (XI)
- dans une troisième étape, on fait réagir le polymère (XI) avec le disulfure de carbone, en présence d'au moins un agent oxydant ou en ajoutant cet agent après la réaction.

A la première étape de ce procédé, on conduit de préférence la réaction à une température d'environ 5 à environ 30°C, en milieu solvant, le solvant étant choisi notamment parmi les solvants aromatiques, tels que le toluène.

A la seconde étape, on conduit de préférence la réaction à une température d'environ 20 à 90°C, en présence d'un solvant non-réactif, tel que l'acétonitrile anhydre. A cette étape, on utilise notamment au moins 2 moles du composé (X), de préférence, au moins 4-5 moles du composé (X) pour 1 mole du polymère (IX).

A la troisième étape, on utilise de préférence un rapport sensiblement équimolaire du polymère (XI) à $CS_2$, la réaction pouvant être effectuée en présence d'une amine tertiaire, à raison d'environ 1 mole par mole du polymère (XI). L'agent oxydant est ajouté, par exemple, à raison d'environ 1 mole par mole de $CS_2$.

La présente invention porte également sur un procédé de fabrication du polymère de formule (II), $P_2$ représentant une séquence polyoxyalkylène ou une séquence polyester issue d'un polyester terminé par des fonctions alcool, caractérisé par le fait que :

- dans une première étape, on fait réagir un polymère de formule :

  HO-$P_2$-OH (XII)

  avec un agent halogénant, pour obtenir un polymère de formule :

$$Hal\text{-}P_2\text{-}Hal \qquad (XIII)$$

où Hal représente halogène ;

- dans une seconde étape, on fait réagir le polymère (XIII) avec un excès du composé (X) ou (X′) ou (X″) ou avec le composé (V) ou (V′), ce qui conduit, si besoin après hydrolyse, au polymère de formule :

$$HA\text{-}P_2\text{-}AH \qquad (XIV) ;$$

et

- dans une troisième étape, on fait réagir le polymère (XIV) avec le disulfure de carbone, en présence d'au moins un agent oxydant ou en ajoutant cet agent après sa formation.

A la première étape, on conduit de préférence la réaction à une température comprise entre environ 5 et 30°C, en milieu solvant, celui-ci étant choisi notamment parmi les solvants aromatiques, tels que le toluène.

A la seconde étape, on conduit de préférence la réaction à une température d'environ 20 à environ 90°C, en présence d'un solvant non-réactif, tel que l'acétonitrile anhydre.

A la troisième étape, on utilise de préférence un rapport molaire du polymère (XIV) à $CS_2$ voisin de 1:2, la réaction pouvant être effectuée en présence d'une amine tertiaire, à raison d'environ 1 mole par mole de $CS_2$. L'agent oxydant est ajouté, par exemple, à raison d'environ 1 mole par mole de $CS_2$.

La présente invention porte également sur un procédé de fabrication d'un polymère de formule (I) où $P_1$ est une séquence polyamide ou une séquence polyester issue d'un polyester terminé par une fonction acide ou ester, caractérisé par le fait qu'on utilise, comme polymère de départ, un polyamide terminé par une fonction amine secondaire, ou bien un polyamide ou un polyester terminé par une fonction acide ou ester que l'on fait réagir avec un excès du composé (X) ou (X″) ou avec un composé (V) ou (V′), pour obtenir, si besoin après hydrolyse, un polymère $P_1$-AH, que l'on fait réagir avec le disulfure de carbone en présence d'au moins un agent oxydant ou en ajoutant cet agent après la réaction.

La présente invention porte également sur un procédé de fabrication d'un polymère de formule (II) où $P_2$ est une séquence polyamide ou une séquence polyester issue d'un polyester terminé par des fonctions acide ou ester, caractérisé par le fait qu'on transforme les terminaisons acide ou ester du polyester de départ, et s'il y a lieu les terminaisons acide ou ester du polyamide de départ, par réaction avec un excès du composé (X) ou (X″) ou avec un composé (V) ou (V′), A représentant

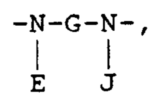

pour obtenir, si besoin après hydrolyse, un polymère HA-$P_2$-AH, que l'on fait réagir avec le disulfure de carbone en présence d'au moins un agent oxydant ou en ajoutant cet agent après la réaction.

A la première étape de ces deux derniers procédés, on conduit la réaction, de préférence à une température comprise entre environ 5°C et 30°C, en milieu solvant, le solvant étant choisi notamment parmi ceux connus de l'homme du métier qui permettent de solubiliser les séquences polyester ou polyamide.

A la seconde étape de ces deux derniers procédés, on utilise de préférence dans le premier cas, un rapport sensiblement équimolaire du polymère $P_1$-AH à $CS_2$, la réaction pouvant être effectuée en présence d'une amine tertiaire, à raison d'1 mole par mole du polymère $P_1$-AH, et l'agent oxydant étant ajouté, par exemple, à raison d'environ 1 mole par mole de $CS_2$ ; et, dans le second cas, on utilise de préférence un rapport du polymère HA-$P_2$-AH à $CS_2$, d'environ 1:2, la réaction pouvant être effectuée en présence d'une amine tertiaire, à raison d'1 mole par mole du polymère HA-$P_2$-AH, et l'agent oxydant étant ajouté, par exemple, à raison d'environ 1 mole par mole de $CS_2$.

La présente invention porte également sur des copolymères triséquencés de formule :

PA-PB-PA

dans laquelle PA est une séquence polymère vinylique, diénique, polyoxyalkylène, polyester ou polyamide, et PB est une séquence polymère vinylique ou diénique, différente de PA lorsque PA est aussi une séquence vinylique ou diénique, PA étant issu du macroiniferter de formule (I).

L'invention porte également sur un procédé de fabrication de ces copolymères triséquencés, caractérisé par le fait qu'on conduit la polymérisation d'un monomère B en présence d'un composé de formule (I), à une température de 50 à 160°C environ, pour obtenir le polymère de formule :

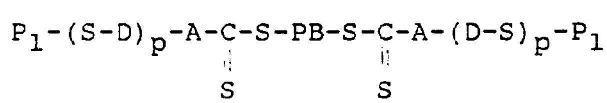

où

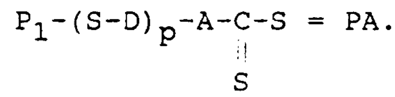

La présente invention porte également sur des copolymères biséquencés de formule :

$$-(PA-PB)_z-$$

dans laquelle PA et PB sont des séquences vinyliques ou diéniques différentes ou bien PA est une séquence polyoxyalkylène, polyester ou polyamide, et PB une séquence vinylique ou diénique, PA étant issu du polymère de formule (II) telle que définie ci-dessus, avec z valant de 2 à 25, notamment de 2 à 10.

L'invention porte également sur un procédé de fabrication de ces copolymères biséquencés, caractérisé par le fait qu'on conduit la polymérisation d'un monomère B, en présence d'un composé de formule (II), à une température de 50 à 160°C environ pour obtenir le polymère de formule :

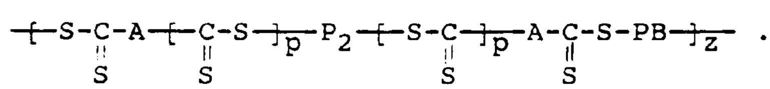

Autrement dit, la séquence PB s'insère entre les fonctions disulfure de thiurame dans la formule (II) telle que développée ci-dessus.

Les exemples suivants illustrent la présente invention sans toutefois en limiter la portée. Dans ces exemples, on a utilisé les abréviations suivantes :

- St : styrène
- MMA : méthacrylate de méthyle
- EA : acrylate d'éthyle
- THF : tétrahydrofuranne
- AIBN : azobisisobutyronitrile
- AET : amino-2 éthanethiol
- BAET : butylamino-2 éthanethiol
- DAET : diéthylamino-2 éthanethiol
- MEP : N-(mercapto-2 éthyl)pipérazine
- BSAET : (N-butyl-1 N-triméthyl silyl)-amino-2 éthanethiol
- PSt : polystyrène
- PMMA : poly(méthacrylate de méthyle)
- PEA : poly(acrylate d'éthyle).

Dans tous les cas, une analyse quantitative des polymères obtenus a été conduite et les masses moléculaires ont été obtenues à partir des résultats de la GPC, et des mesures de la viscosité intrinsèque. Les polymères comportant des fonctions amine NH ont fait l'objet d'un dosage spécifique de la fonction. Les spectres RMN $^1H$ et IR ont confirmé les structures attendues.

EXEMPLE 1

Préparation du macroiniferter de formule :

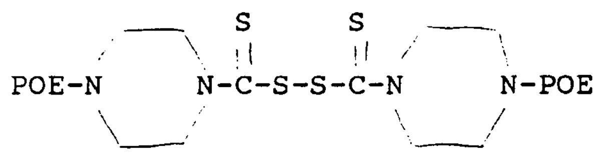

$$POE-OH + SOCl_2 \xrightarrow[110^{\circ}C]{pyridine,\ toluène} POE-Cl$$

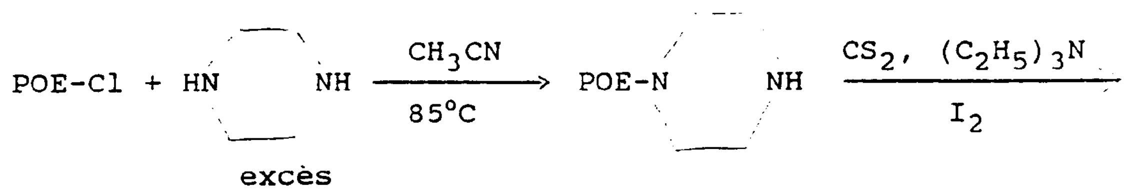


produit attendu

On dissout 0,005 mole de POE-OH ($\overline{Mn}$ : 5000 ; 0,005 mole) dans 180 ml de toluène et on le sèche par distillation azéotropique. On récupère environ 30 ml de toluène. A la solution restante, on ajoute 0,01 mole de pyridine en faisant suivre par 0,01 mole de chlorure de thionyle, fraction par fraction, tout en portant au reflux sous argon. On maintient le système au reflux pendant 4 heures, on le refroidit et on le dilue avec 200 ml de toluène, puis on filtre pour enlever le chlorhydrate de pyridine. On peut décolorer la solution de toluène par traitement par du charbon actif, et le polymère est précipité dans l'éther.

On traite le POE-Cl obtenu (20g ; 0,04 mole) par 15 ml d'acétonitrile sec et 0,2 mole de pipérazine. On fait réagir le système à 85°C pendant 8 heures, on le refroidit et on y ajoute 150 ml de toluène distillé. On filtre la solution et le polymère est récupéré par précipitation dans l'éther.

La thiocarbamylation est effectuée comme suit : on dissout 15 g du polymère ci-dessus dans 100 ml de toluène ; on ajoute 1 ml de triéthylamine et 1 ml de $CS_2$. On ajoute une solution de $I_2$ dans le toluène avant le point final. Après agitation de la solution à la température ambiante pendant 1 heure, on la filtre et le macroiniferter attendu est précipité dans l'éther et séché sous vide à la température ambiante. Le macroiniferter est caractérisé par GPC : sa masse moléculaire $\overline{Mw}$ est de 14 000.

EXEMPLE 2

On a procédé comme à l'Exemple 1 mais en partant d'un POE-OH de $\overline{Mw}$ 2 000. La masse moléculaire $\overline{Mn}$ du macroiniferter obtenu est de 14 000.

EXEMPLE 3

Préparation du polyiniferter de formule:

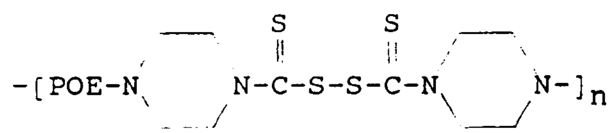

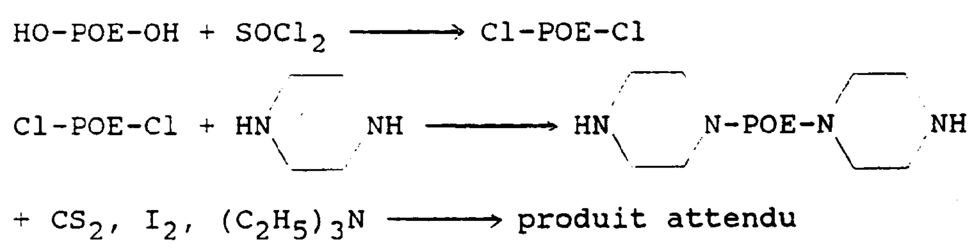


On a utilisé un HO-POE-OH de $\overline{Mw}$ 3 800. Le polyiniferter est réalisé exactement dans les mêmes conditions qu'à l'Exemple 1, excepté que le rapport molaire de tous les réactifs au POE sont doublés, étant donné que le POE est bifonctionnel, et que le système réactionnel est chauffé plusieurs jours pour désactiver toutes les liaisons thiurame.

On a préparé un polyiniferter ayant les caractéristiques suivantes :

- masse moléculaire : 17 600
- $\overline{n}$ = 4,1.

EXEMPLE 4

On a procédé comme à l'Exemple 3, mais en partant d'un HO-POE-OH de masse moléculaire 8 000. Le polyiniferter obtenu présente une masse moléculaire de 16 200, avec $\overline{n}$ = 2.

EXEMPLES 5 à 24

Les Tableaux 1 à 4 suivants illustrent les conditions de synthèse de copolymères triséquencés PA-PB-PA ou biséquencés $(PA\text{-}PB)_z$ à l'aide respectivement des macroiniferters des Exemples 1 et 2, et du polyiniferter de l'Exemple 3, ainsi que les résultats obtenus.

Mode opératoire général de préparation des copolymères triséquencés

Le macroiniferter est dissous dans 10 ml de monomère dans un tube en verre Pyrex et scellé sous vide. La polymérisation est conduite à 80-85°C pendant 24 heures. Le polymère est dissous dans le THF et précipité dans le méthanol. Le macroiniferter non utilisé est éliminé par dissolution. Le copolymère est récupéré par filtration et séché sous vide. Il est caractérisé par GPC (masse moléculaire) et par RMN (composition).

Mode opératoire général de préparation des copolymères biséquencés

Le mode opératoire est identique à celui utilisé pour la préparation des polymères triséquencés, à ceci près que les temps de polymérisation peuvent aller jusqu'à 48-60 heures, et que le toluène doit être utilisé comme solvant. Le copolymère est précipité dans l'heptane et il est purifié par du méthanol froid. Il est caractérisé par GPC (masse moléculaire) et par RMN (composition).

Tableau 1

Conditions de synthèse pour le copolymère POE-PMMA-POE avec les macroiniferters des Exemples 1 et 2

| Ex | Macroiniferter | [MI] * | Solvant | Conversion (%) | $\overline{M}n \times 10^{-4}$ | I ** | % POE attendu dans le copolymère triséquencé |
|---|---|---|---|---|---|---|---|
| 5 | de l'Exemple 2 | 10 | sans | 25 | 7,05 | 2,6 | 6,1 |
| 6 | de l'Exemple 1 | 10 | " | 20 | 18,6 | 2,5 | 6 |
| 7 | " | 20 | " | 40 | 10,5 | 4,0 | 11 |
| 8 | " | 30 | " | 50 | 10,0 | 2,36 | 11,1 |
| 9 | " | 40 | " | 20 | 9,5 | 2 | 12 |
| 10 | " | 50 | toluène 100% | | 7,3 | 1,53 | |
| 11 | " | 70 | " | | 6,0 | 1,42 | |

* [MI] = grammes de macroiniferter pour 100 ml de monomère.

** I = indice de polydispersité des masses moléculaires

Tableau 2

Conditions de synthèse pour le copolymère POE-PSt-POE avec le macroiniferter de l'Exemple 1

| Ex | [MI] | Solvant | Conversion (%) | $\overline{Mn}x10^{-4}$ | I | % POE attendu dans le copolymère triséquencé |
|---|---|---|---|---|---|---|
| 12 | 10 | sans | 44 | 8,5 | 1,93 | 13,5 |
| 13 | 16,7 | " | 48 | 7,2 | 1,83 | 18,7 |
| 14 | 23,3 | " | 48 | 6,5 | 1,84 | 21,6 |
| 15 | 30 | " | 63 | 5,7 | 1,97 | 29,5 |
| 16 | 50 | Toluène (100%) | | 4,1 | 1,48 | 28,1 |
| 17 | 70 | " | | 3,9 | 1,45 | 29,3 |

Tableau 3

Synthèse de $[POE\text{-}PMMA]_z$ avec le polyiniferter de l'Exemple 3 (Température : 85ºC)

| Ex | $[PI]^*$ | Solvant (toluène) | $\overline{Mn}x10^{-4}$ | $I^{**}$ | % POE trouvé par analyse | z |
|---|---|---|---|---|---|---|
| 18 | 11,5 | 150% | 4,02 | 2,4 | 25,2 | 2,7 |
| 19 | 20 | 225% | 3,54 | 2,0 | 32,5 | 3,0 |
| 20 | 30 | 300% | 3,23 | 2,1 | 40,4 | 3,4 |
| 21 | 40 | 400% | 3,02 | 2,1 | 43,1 | 3,4 |

*[PI] = grammes de polyiniferter pour 100 ml de monomère

**I = indice de polydispersité des masses moléculaires.

## Tableau 4

Synthèse de $[POE\text{-}PSt]_z$ avec le polyiniferter de l'Exemple 3 (solvant : toluène 100% ; température : 85ºC)

Le polymère multiséquencé obtenu est purifié par l'extraction avec le méthanol.

| Ex | [PI] | $\overline{Mn}x10^{-4}$ | I |
|---|---|---|---|
| 22 | 5 | 6,35 | 2,8 |
| 23 | 10 | 6,66 | 2,1 |
| 24 | 20 | 5,96 | 2,3 |

### EXEMPLES 25 à 30

Préparation de polymères vinyliques terminés à une extrémité de la chaîne par une fonction amine

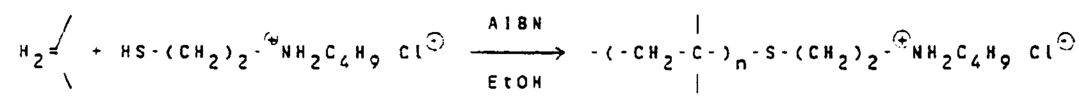


### Mode opératoire général

Les différents monomères vinyliques (MMA ; EA ; St) sont purifiés sous pression réduite en présence de $CaH_2$.

L'agent de transfert, à savoir le chlorhydrate de BAET (Aldrich) est purifié par distillation sous vide. La synthèse du sel correspondant est effectuée dans une solution d'éther distillé par ajout, en excès molaire, d'acide chlorhydrique aqueux. L'éther est éliminé ensuite par décantation. Le sel est extrait à l'aide du chloroforme, le mélange étant séché sur sulfate de sodium. Après filtration, puis évaporation sous vide du chloroforme, on récupère le sel.

Pour conduire la synthèse du polymère vinylique terminé à une extrémité de chaîne par une fonction amine, on dissout une quantité donnée d'agent de transfert (sel) dans un volume donné d'éthanol. Une fois le sel totalement dissous, on ajoute 5 mg d'AIBN (30,4 x $10^{-6}$ mole), ainsi que 10 ml de monomère.

La polymérisation a lieu à 60°C dans des tubes scellés et sous vide, le mélange réactionnel ayant été au préalable refroidi dans un mélange de carboglace et d'isopropanol, dégazé sous vide, puis laissé à température ambiante, et ce, plusieurs fois. Dilué dans une solution de THF, le polymère obtenu est précipité dans du méthanol (dans le cas où le monomère est St ou MMA), ou dans un mélange 50-50 d'eau et de méthanol (dans le cas où le monomère est l'EA). Il est enfin séché sous vide à 50°C pendant 3-4 heures.

Le Tableau 5 ci-après illustre les conditions de synthèse de différents polymères de ce type.

Tableau 5

| Ex | Monomère | Quantité d'agent de transfert (g) | Volume d'éthanol (ml) | $\overline{Mp}^*$ du polymère obtenu |
|---|---|---|---|---|
| 25 | EA | 0,15 | 5 | 45 200 |
| 26 | " | 0,25 | 5 | 18 700 |
| 27 | " | 1,00 | 20 | 5 600 |
| 28 | MMA | 1,00 | 20 | 9 800 |
| 29 | " | 0,55 | 20 | 23 800 |
| 30 | " | 0,39 | 20 | 38 500 |

$$* \ \overline{Mp} = \sqrt{\overline{Mn}\ \overline{Mw}}$$

EXEMPLES 31 à 58

Préparation de polymères vinyliques terminés à une extrémité de chaîne par une fonction amine

Mode opératoire général

On réalise différentes polymérisations dans des tubes en verre, sous vide, scellés, contenant le monomère, l'initiateur, l'éthanol comme solvant, et l'agent de transfert de chaîne dans un bain d'huile à 60°C. Après la polymérisation, le contenu des tubes est précipité dans un large excès de méthanol ou d'heptane. Le précipité est filtré, lavé et séché. Les masses moléculaires sont déterminées par GPC calibrée avec PMMA et PSt standards, à l'aide de THF comme éluant.

Obtention du DAET

Le DAET a été libéré à partir de son chlorhydrate par traitement de sa solution aqueuse avec un léger excès de NaOH. L'amine libérée a été extraite par l'éther, séchée ; l'éther a été évaporé, et le résidu, distillé sous vide.

Obtention de la MEP

On fait réagir 0,05 mole de pipérazine pendant toute une nuit avec 0,01 mole de sulfure d'éthylène dans le THF sec au reflux. Le THF est évaporé, et le résidu distillé sous vide. La fraction bouillant à 73°C/666,6 Pa est recueillie.

Le chlorhydrate de MEP est préparé par traitement d'une solution alcoolique par HCl, puis par précipitation dans l'éther.

Obtention de BSAET

A 0,05 mole de BAET dans 50 ml d'éther sec contenant 0,06 mole de triéthylamine, on ajoute goutte à goutte 0,05 mole de triméthylchlorosilane sous argon à environ 10°C. Après addition, on fait réagir le système pendant 2 heures. On filtre le chlorhydrate d'amine. Après avoir récupéré l'éther à partir du résidu, on distille celui-ci sous vide. La fraction bouillant à 73°C/666,6 Pa est recueillie, et caractérisée par RMN $^1$H, et sa pureté est déterminée à partir de la teneur en SH.

Le Tableau 6 ci-après illustre les conditions de synthèse de différents polymères de ce type.

Tableau 6

| Ex | Monomère M | Conditions de polymérisation: Masse | Conditions de polymérisation: Concentration de M en mole/l dans l'éthanol | [AIBN] mole/l | Agent de transfert | $\frac{[SH]}{[M]} 10^3$ | $\overline{Mn}$ | $\overline{Mp}$ |
|---|---|---|---|---|---|---|---|---|
| 31 | MMA | | 6,7 | $2,17 \times 10^{-3}$ | AET | 5,11 | $5,89 \times 10^5$ | |
| 32 | " | | " | " | " | 25 | $4,27 \times 10^5$ | |
| 33 | " | + | | $3,5 \times 10^{-3}$ | BAET | 3,40 | $3,31 \times 10^5$ | |
| 34 | " | " | | " | " | 20,41 | $1,75 \times 10^5$ | |
| 35 | " | | 6,7 | $3,48 \times 10^{-3}$ | DAET | 1,32 | $4,52 \times 10^5$ | |
| 36 | " | | " | " | " | 7,88 | $3,65 \times 10^5$ | |
| 37 | " | + | | $6,7 \times 10^{-3}$ | MEP | 0,43 | | $10,1 \times 10^4$ |
| 38 | " | " | | " | " | 17,44 | | $2,38 \times 10^4$ |
| 39 | EA | | 2,31 | $6,1 \times 10^{-4}$ | BAET-HCl | 2,13 | | $10,95 \times 10^4$ |
| 40 | " | | " | " | " | 8,53 | | $7,32 \times 10^4$ |
| 41 | St | | 7,54 | $4,06 \times 10^{-3}$ | " | 0,61 | $9,97 \times 10^3$ | |
| 42 | " | | " | " | " | 2,97 | $3,30 \times 10^3$ | |
| 43 | MMA | + | | $6,1 \times 10^{-3}$ | " | 4,55 | $3,39 \times 10^5$ | |
| 44 | " | " | | " | " | 18,18 | $2,35 \times 10^5$ | |
| 45 | St | | 6,46 | $3,48 \times 10^{-3}$ | AET | 3,57 | | $5,96 \times 10^4$ |
| 46 | " | | " | " | " | 12,24 | | $3,3 \times 10^3$ |
| 47 | EA | + | | $3,05 \times 10^{-3}$ | BAET | 0,74 | | $11,25 \times 10^5$ |
| 48 | " | " | | " | " | 2,59 | | $4,30 \times 10^5$ |
| 49 | St | + | | " | " | 0,76 | $4,75 \times 10^3$ | |
| 50 | " | " | | " | " | 3,82 | $1,10 \times 10^3$ | |
| 51 | MMA | | 2,35 | $1,52 \times 10^{-3}$ | BAET-HCl | 6,96 | | $10,95 \times 10^4$ |
| 52 | " | | " | " | " | 24,37 | | $2,79 \times 10^4$ |
| 53 | " | | 2,60 | $1,35 \times 10^{-3}$ | $MEP(HCl)_2$ | 1,12 | $1,87 \times 10^5$ | |
| 54 | " | | " | " | " | 4,80 | $0,64 \times 10^5$ | |
| 55 | " | | 2,27 | $2,54 \times 10^{-3}$ | DAET-HCl | 3,80 | $5,52 \times 10^5$ | |
| 56 | " | | " | " | " | 23,70 | $1,16 \times 10^5$ | |
| 57 | St | | 6,46 | $3,48 \times 10^{-3}$ | AET-HCl | 1,43 | | $2,04 \times 10^4$ |
| 58 | " | | " | " | " | 5,65 | | $0,53 \times 10^4$ |

Exemples 59 à 68

Préparation de macroiniferters vinyliques

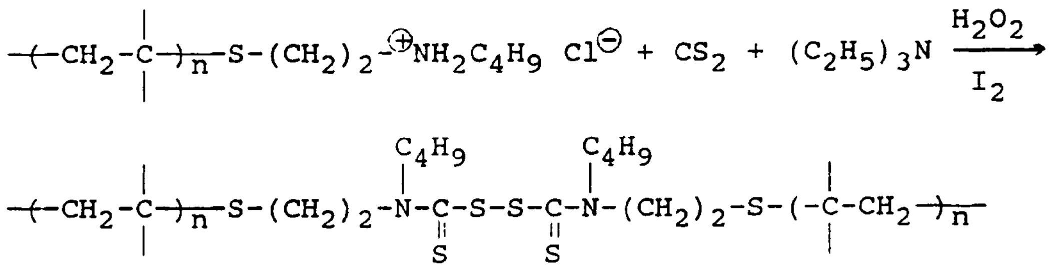


Mode opératoire général

On dissout le polymère de départ à 15% en poids dans le chloroforme. On ajoute alors la triéthylamine (Aldrich) et le disulfure de carbone (Aldrich) en quantités au minimum molaires pour $CS_2$ et deux fois molaires pour la triéthylamine.

On agite le mélange pendant environ 30 minutes à la température ambiante. L'ajout d'$I_2$ conduit à l'oxydation du soufre et à la synthèse du macroiniferter. Les produits secondaires de la réaction sont séparés du polymère de départ par lavage a l'eau si le polymère de départ est un PEA, le macroiniferter PEA étant récupéré après évaporation sous vide du chloroforme. Dans le cas du PMMA et du PSt, le macroiniferter est récupéré directement dans le méthanol et séché sous vide.

EXEMPLE 59

Préparation du macroiniferter

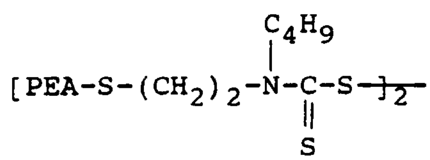

A 3 g du polymère de l'Exemple 27 (0,51 mole) dissous au préalable dans 20 ml de chloroforme, on ajoute 0,2 ml de triéthylamine (1,434 x $10^{-3}$ mole) et 0,05 ml de $CS_2$ (0,829 x $10^{-3}$ mole). On agite le mélange pendant 30 minutes environ à la température ambiante. On ajoute 0,1 g d'iode (0,787 x $10^{-3}$ mole) dissous dans du chloroforme, ce qui conduit à la synthèse du macroiniferter attendu de $\overline{Mp}$ : 12 500.

EXEMPLES 60 à 68

On a également conduit les synthèses suivantes de macroiniferters :

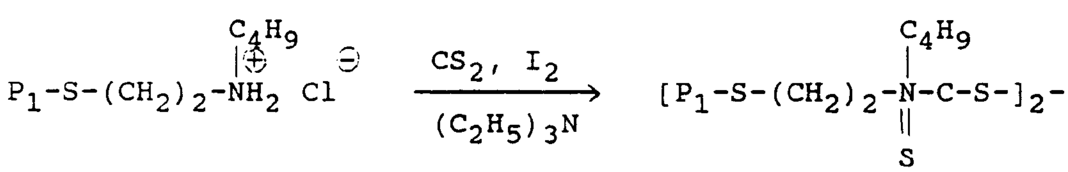


Mode opératoire général

On agite le polymère de départ avec $CS_2$, à raison d'1 mole, en présence d'une mole de triéthylamine par mole de polymère de départ ou de $CS_2$, à la température ambiante, dans le chloroforme. Puis, on conduit l'oxydation à l'aide d'une solution d'iode dans du $HCCl_3$.

Tableau 7

| Ex | $P_1$ | $\overline{Mp}$ du polymère de départ | $\overline{Mp}$ du macro-iniferter |
|---|---|---|---|
| 60 | PEA | 5 600 | 12 500 |
| 61 | " | 18 700 | 38 500 |
| 62 | " | 57 500 | 93 200 |
| 63 | PMMA | 23 800 | 61 500 |
| 64 | " | 38 500 | 81 800 |
| 65 | " | 33 000* | 60 000* |
| 66 | PSt | 15 200 | 25 000 |
| 67 | " | 39 400 | 57 800 |
| 68 | " | 77 200 | 105 100 |

* $\overline{Mw}$

Exemples 69 à 88

Synthèse de polymères triséquencés :

PEA-PMMA-PEA

et

PEA-PSt-PEA

On conduit une polymérisation en solution, le macroiniferter étant du type de celui de l'Exemple 59. On utilise, come solvant, le THF distillé, dans une proportion de 50 à 100% en volume par rapport aux monomères MAM et St, ce rapport croissant avec la masse molaire du macroiniferter copolymérisé. Après homogénéisation de la solution, on ajoute 10 ml de MMA ou de ST. La polymérisation s'effectue à une température de 80°C, pendant 48 heures, dans des tubes scellés, sous vide, et dégazés plusieurs fois selon le mode opératoire décrit pour la synthèse du polymère terminé par une fonction amine. Le polymère triséquencé obtenu est dilué dans une solution de THF, puis purifié par précipitation dans du méthanol.

Le Tableau 8 ci-après illustre les conditions de synthèse de différents polymères de ce type :

Tableau 8

| Ex | Monomère | Longueur de chaine du PEA du macroiniferter utilisé ($\overline{Mw}$) | % en volume du THF par rapport à M | Concentration en g du macroiniferter pour 100 ml de M | Masse moléculaire du copolymère triséquencé x $10^{-3}$ | I | % en masse EA calculé par $\overline{Mw}$ | % en masse trouvé par analyse |
|---|---|---|---|---|---|---|---|---|
| 69 | MMA | 8 400 | 50 | 16,7 | 216 | 2,0 | 7,7 | nd* |
| 70 | " | " | " | 66,7 | 89,3 | 2,9 | 18,7 | 21,0 |
| 71 | St | " | " | 16,7 | 124,1 | 1,7 | 13,5 | 14,6 |
| 72 | " | " | " | 100 | 37,8 | 1,5 | 44,2 | nd |
| 73 | MMA | 18 400 | 100 | 25,0 | 485,7 | 2,5 | 7,6 | 5,5 |
| 74 | " | " | " | 112,5 | 232,5 | 2,2 | 15,9 | 12,7 |
| 75 | St | " | " | 25,0 | 159,8 | 1,7 | 23,1 | 28,1 |
| 76 | " | " | " | 112,5 | 70,0 | 1,0 | 52,7 | 58,7 |
| 77 | MMA | 25 600 | " | 25 | 237,9 | 1,8 | 21,5 | 12,9 |
| 78 | " | " | " | 200 | 88,7 | 1,9 | 57,7 | 29,6 |
| 79 | St | " | " | 25 | 160,8 | 1,7 | 31,8 | 35,1 |
| 80 | " | " | " | 125 | 66,3 | 1,6 | 77,2 | 60,9 |
| 81 | MMA | 34 200 | " | 5,0 | 211,1 | 2,0 | 32,4 | |
| 82 | " | " | " | 55 | 103,5 | 1,9 | 66,2 | 20,5 |
| 83 | St | " | " | 5,0 | 251,2 | 2,5 | 27,3 | 16,6 |
| 84 | " | " | " | 55 | 118,2 | 1,7 | 57,9 | 40,8 |
| 85 | MMA | 39 100 | " | 12,5 | 326,5 | 1,4 | 24,0 | 6,0 |
| 86 | " | " | " | 62,5 | 197,5 | 1,5 | 39,6 | 17,9 |
| 87 | St | " | " | 12,5 | 377,4 | 2,7 | 20,7 | |
| 88 | " | " | " | 62,5 | 116,1 | 1,6 | 67,4 | |

*nd = non déterminé

EXEMPLE 89

Synthèse d'un polyiniferter de formule (II) avec $P_2$ méthacrylique

Première étape

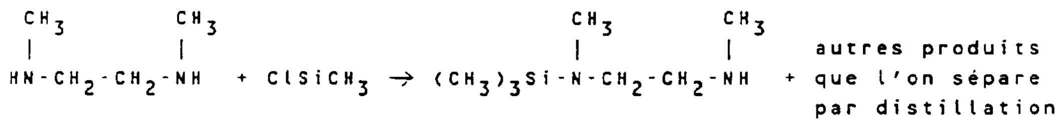


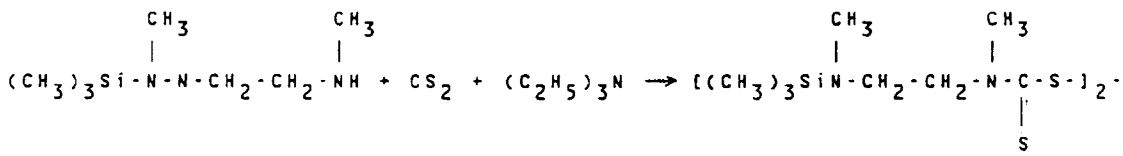

On fait réagir 1 mole de N,N-diméthyléthylènediamine avec 0,2 mole de chlorure de triméthylsilane. 0,1 mole du composé monosilylé est, après récupération, mise en présence de 0,1 mole de $CS_2$ et 0,1 mole de $I_2$ dans le $HCCl_3$ contenant 0,1 mole de triéthylamine. Le produit est ensuite lavé à l'eau glacée pour extraire le sel d'ammonium et pour hydrolyser l'amine bloquée par le groupe triméthylsilane selon la réaction :

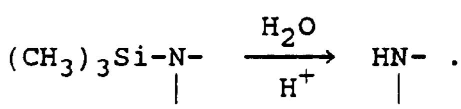


Le $HCCl_3$ est ensuite évaporé et le produit est gardé à l'abri de la lumière.

Deuxième étape

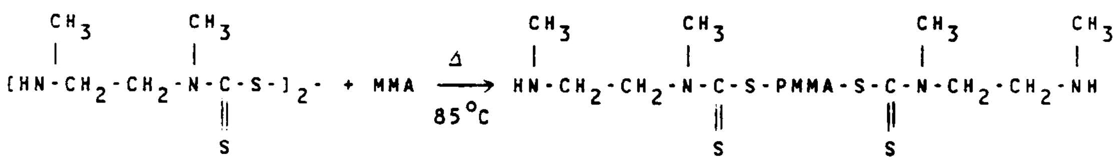


On mélange 10 ml de MMA avec 300 ml du composé iniferter obtenu à la première étape, et le mélange obtenu est scellé sous vide dans un tube en verre Pyrex. On conduit la polymérisation à 85°C pendant 24 heures. Le polymère terminé aux deux extrémités par des fonctions amine est séparé par précipitation dans le méthanol et il est séché.

Troisième étape

$$\text{Produit de la deuxième étape} + 2CS_2 + I_2 + (C_2H_5)_3N \longrightarrow$$

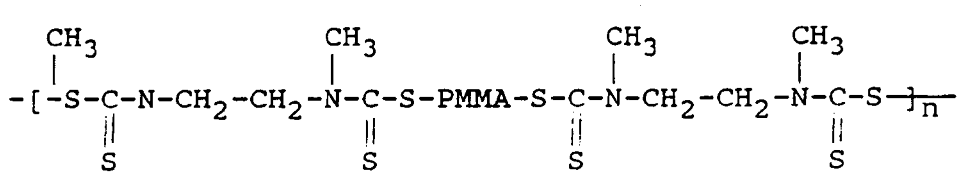

On dissout 5 g du produit de la deuxième étape dans 50 ml de $CHCl_3$. On y ajoute 0,5 ml de $CS_2$ et 1 ml de triéthylamine, puis une solution de $I_2$ dans $CHCl_3$ jusqu'au point final. On récupère le polyiniferter par précipitation de la solution dans le méthanol. Le produit est isolé par filtration et séché à la température ambiante.

EXEMPLE 90

On conduit la même synthèse qu'à l'Exemple 89, mais en utilisant le styrène comme monomère.

EXEMPLE 91

Synthèse d'un copolymère biséquencé à séquences PMMA et PSt

$$\text{Polyiniferter de l'Exemple 89} + \text{St} \xrightarrow{\Delta} \text{Polymère } (\text{PMMA-PSt})_z$$

On mélange 2 g du polyiniferter obtenu dans 5 ml de St dilué avec du toluène (par exemple, 5 ml). On scelle pendant 24 heures à 80°C. On isole le polymère par précipitation dans le méthanol. On sépare du copolymère à blocs le polyiniferter n'ayant pas réagi par extraction avec l'acétone.

EXEMPLE 92

On procède comme à l'Exemple 91, mais on utilise le polyiniferter de l'Exemple 90 et du MMA comme monomère ajouté ; dans ce cas, l'extraction du copolymère à blocs est conduite à l'aide du cyclohexane pour éliminer le polyiniferter en excès.

## Revendications

1. Polymère renfermant au moins un groupement disulfure de thiurame dans sa chaîne principale et représenté par la formule :

$$[P_1-(S-D)_p-A-\underset{\underset{S}{\|}}{C}-S-]_2- \qquad \text{(I)} ;$$

ou

$$-[-S-\underset{\underset{S}{\|}}{C}-A-[-\underset{\underset{S}{\|}}{C}-S-]_p-P_2-[-S-\underset{\underset{S}{\|}}{C}-]_p-A-\underset{\underset{S}{\|}}{C}-S]_n- \qquad \text{(II)}$$

où :
- $P_1$ et $P_2$ représentent chacun une séquence polymère issue d'au moins un monomère choisi parmi les monomères vinyliques et diéniques, auquel cas p vaut 1, ou bien une séquence polymère choisie parmi les séquences polyoxyalkylène, polyester ou polyamide, auquel cas p vaut 0 ;
- A représente :
  (1) un reste

$$\underset{\underset{R_1}{|}}{-N-},$$

  $R_1$ représentant un groupe alkyle, linéaire ou ramifié, comprenant éventuellement au moins un hétéroatome et/ou au moins un reste

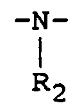

ou

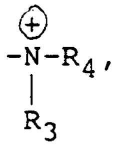

($R_2$, $R_3$ et $R_4$ représentant chacun un groupe alkyle, cycloalkyle ou aryle) et portant éventuellement au moins un groupement fonctionnel;

cette signification (1) de A valant pour la formule (I) sauf si $P_1$ est une séquence polyamide ou une séquence polyester issue d'un polyester terminé par une fonction acide ou ester, ainsi que pour la formule (II), mais seulement si $P_2$ est une séquence polyoxyalkylène ou une séquence polyester issue d'un polyester terminé par des fonctions OH ;

(2) un reste

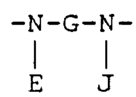 ,

où :

- G représente :
  . un reste $-(CR_5R_{6})_a-$, avec $R_5$ et $R_6$ représentant chacun, indépendamment l'un de l'autre, hydrogène ou un reste alkyle, lequel comprend éventuellement au moins un hétéroatome et/ou au moins un reste

  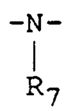 ,

  $R_7$ étant choisi parmi les groupes alkyle, cycloalkyle et aryle, et a représentant un nombre entier de 1 à 6 ; ou
  . le reste d'un cycle aliphatique pouvant renfermer au moins un hétéroatome ;
- E et J représentent indépendamment l'un de l'autre un groupe alkyle, comprenant éventuellement au moins un hétéroatome et/ou au moins un reste

  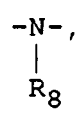

  $R_8$ étant choisi parmi les groupes alkyle, cycloalkyle et aryle ; un groupe cycloalkyle ; un groupe aryle; -K-L, K représentant une simple liaison, un groupe alkylène comprenant éventuellement un hétéroatome et/ou au moins un reste

  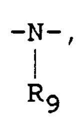

  $R_9$ étant choisi parmi les restes alkyle, cycloalkyle ou aryle ; un groupe cycloalkylène ; ou un

groupe arylène ; et L représente un groupement fonctionnel, chacun des groupes E, J, $R_8$ et $R_9$ pouvant porter au moins un groupement fonctionnel, E et J du groupe

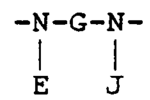

pouvant être réunis pour constituer un hétérocyle azoté ; le groupe

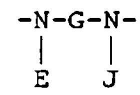

pouvant également représenter :

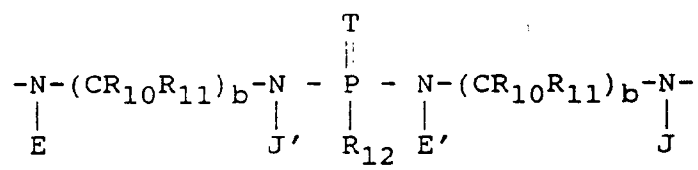

ou

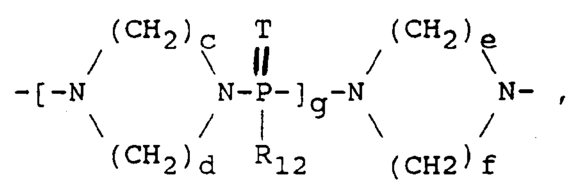

avec :

- b représentant un nombre entier de 1 à 12 ;
- $R_{10}$ et $R_{11}$ représentant chacun, indépendamment l'un de l'autre, hydrogène ou un reste alkyle en $C_1$-$C_{12}$, ledit reste alkyle comprenant éventuellement au moins un hétéroatome et/ou au moins un reste

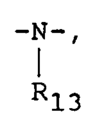

$R_{13}$ étant choisi parmi les groupes alkyle, cycloalkyle et aryle ;

- E' et J' ayant respectivement les mêmes significations que E et J ;
- T représentant un atome d'oxygène ou de soufre, et =T pouvant être absent ;
- $R_{12}$ représentant un groupe alkyle ou alcoxy en $C_1$-$C_{12}$, cycloalkyle ou cycloalcoxy en $C_3$-$C_{12}$, aryle ou aryloxy, ces groupes pouvant porter des substituants ;
- c, d, e et f représentant chacun indépendamment un nombre entier de 1 à 3 ;
- g représentant un nombre entier de 10 à 40 ;

(3) A pouvant également représenter, dans la formule (I), lorsque $P_1$ représente une séquence vinylique ou diénique, un reste

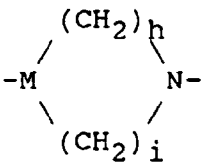

où :

- M, relié à D, représente

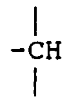 ou 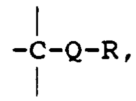

Q représentant une simple liaison ou un groupement alkylène, cycloalkylène ou arylène et R représentant COOH, $COOR_{14}$ ($R_{14}$ représentant alkyle, cycloalkyle ou aryle), OH, un groupement phosphoré, -CN, ou un reste imine

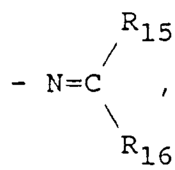

avec $R_{15}$ et $R_{16}$ représentant chacun indépendamment un groupement aromatique en $C_6$-$C_{10}$, un groupement cycloaliphatique en $C_5$-$C_{10}$ ou un groupement aliphatique en $C_1$-$C_6$ ; et
- h et i représentent chacun un nombre entier de 1 à 3 ;
- D représente une simple liaison ou bien un groupement alkylène, cycloalkylène ou arylène, D ne pouvant représenter qu'une simple liaison dans le cas où M représente CH ;
- n vaut de 1 à 20.

2. Procédé de préparation du polymère de formule (I) de la revendication 1, $P_1$ représentant une séquence polymère issue d'au moins un monomère $M_1$ choisi parmi les monomères vinyliques et diéniques, caractérisé par le fait que :
   - dans une première étape, on conduit la polymérisation radicalaire du monomère $M_1$, en présence d'au moins un initiateur de radicaux libres et d'au moins un agent de transfert de formule :

   HS-D-A-H (III)

   ou

   $$HS-D-\overset{\oplus}{A}H_2X^{\ominus} \quad (III')$$

   X représentant halogène, et l'hydrogène du groupement amine secondaire terminal pouvant être remplacé par un groupement de protection ; puis,
   - dans une seconde étape, au besoin après régénération de l'amine secondaire, par exemple par hydrolyse, on fait réagir le polymère

   $P_1$-S-D-AH (IV)

   ou

   $$P_1-S-D-\overset{\oplus}{A}H_2X^{\ominus} \quad (IV')$$

   obtenu à l'issue de la première étape avec le disulfure de carbone en présence d'au moins un agent oxydant ou en ajoutant cet agent après la réaction.

3. Polymères représentés par la formule :

$$P_1\text{-S-D-AH} \qquad \text{(IV)}$$

ou

$$P_1\text{-S-D-}\overset{\oplus}{A}H_2\overset{\ominus}{X} \qquad \text{(IV')}$$

dans laquelle :
- $P_1$ est une séquence polymère vinylique ou diénique ; et
- D et A étant tels que définis à la revendication 1 ; et
- X représentant halogène,

l'hydrogène du groupement amine secondaire terminal pouvant être remplacé par un groupement de protection.

4. Procédé de préparation des polymères selon la revendication 3, caractérisé par le fait qu'on conduit la polymérisation du monomère vinylique ou diénique $M_1$ en présence d'au moins un initiateur de radicaux libres et d'au moins un agent de transfert de formule :

$$\text{HS-D-AH} \qquad \text{(III)}$$

ou

$$\text{HS-D-}\overset{\oplus}{A}H_2\overset{\ominus}{X} \qquad \text{(III')}.$$

5. Procédé de préparation du polymère de formule (II) de la revendication 1, $P_2$ représentant une séquence polymère issue d'au moins un monomère $M_2$ choisi parmi les monomères vinyliques et diéniques, caractérisé par le fait que :
- dans une première étape, on fait réagir un composé de formule :

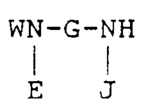 (V) ou 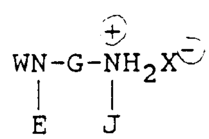 (V')

dans laquelle W est un groupement de protection, avec le disulfure de carbone, en présence d'au moins un agent oxydant ou en ajoutant cet agent après la réaction, puis on hydrolyse le produit obtenu, ce qui conduit au composé de formule :

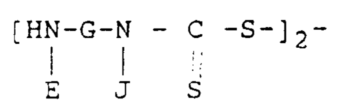 (VI) ;

- dans une seconde étape, on conduit la polymérisation du monomère $M_2$ en présence du composé (VI) ; et
- dans une troisième étape, on fait réagir le polymère obtenu à la seconde étape avec le disulfure de carbone, en présence d'au moins un agent oxydant ou en ajoutant cet agent après la réaction.

6. Procédé de fabrication du polymère de formule (I), $P_1$ représentant une séquence polyoxyalkylène ou une séquence polyester issue d'un polyester terminé par une fonction alcool, caractérisé par le fait que :
- dans une première étape, on fait réagir un polymère $P_1$-OH avec un agent halogénant ;
- dans une seconde étape, on fait réagir le polymère obtenu $P_1$-Hal avec un excès du composé de formule :

$$\text{H-A-H} \qquad \text{(X)};$$

ou

$$H\overset{\oplus}{A}H_2\ X^{\ominus} \qquad (X')$$

si A a la signification (1) ; ou

$$X^{\ominus}{}_2H\underset{\oplus}{\overset{\oplus}{A}}H_2X^{\ominus} \qquad (X'')$$

si A a la signification (2),
ou avec un composé de formule (V) ou (V′) auquel cas le produit résultant est hydrolysé après sa formation ;

- dans une troisième étape, on fait réagir le polymère obtenu $P_1$-AH avec le disulfure de carbone, en présence d'au moins un agent oxydant ou en ajoutant cet agent après la réaction.

**7.** Procédé de fabrication du polymère de formule (II) de la revendication 1, $P_2$ représentant une séquence polyoxyalkylène ou une séquence polyester issue d'un polyester terminé par des fonctions alcool, caractérisé par le fait que :
- dans une première étape, on fait réagir un polymère HO-$P_2$-OH avec un agent halogénant ;
- dans une seconde étape, on fait réagir le polymère obtenu Hal-$P_2$-Hal avec un excès du composé (X) ou (X′) ou (X") ou avec le composé (V) ou (V′), ce qui conduit, si besoin après hydrolyse, au polymère de formule HA-$P_2$-AH ; et
- dans une troisième étape, on fait réagir le polymère (XIV) avec le disulfure de carbone, en présence d'au moins un agent oxydant ou en ajoutant cet agent après sa formation.

**8.** Procédé de fabrication d'un polymère de formule (I) où $P_1$ est une séquence polyamide ou une séquence polyester issue d'un polyester terminé par une fonction acide ou ester, caractérisé par le fait qu'on utilise, comme polymère de départ, un polyamide terminé par une fonction amine secondaire, ou bien un polyamide ou un polyester terminé par une fonction acide ou ester que l'on fait réagir avec un excès du composé (X) ou (X″) ou avec un composé (V) ou (V′), pour obtenir, si besoin après hydrolyse, un polymère $P_1$-AH, que l'on fait réagir avec le disulfure de carbone en présence d'au moins un agent oxydant ou en ajoutant cet agent après la réaction.

**9.** Procédé de fabrication d'un polymère de formule (II) où $P_2$ est une séquence polyamide ou une séquence polyester issue d'un polyester terminé par des fonctions acide ou ester, caractérisé par le fait qu'on transforme les terminaisons acide ou ester du polyester de départ, et s'il y a lieu les terminaisons acide ou ester du polyamide de départ, par réaction avec un excès du composé (X) ou (X″) ou avec un composé (V) ou (V′), A représentant

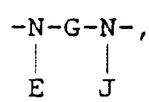

pour obtenir, si besoin après hydrolyse, un polymère HA-$P_2$-AH, que l'on fait réagir avec le disulfure de carbone en présence d'au moins un agent oxydant ou en ajoutant cet agent après la réaction.

**10.** Copolymères triséquencés de formule :

PA-PB-PA

dans laquelle PA est une séquence polymère vinylique, diénique, polyoxyalkylène, polyester ou polyamide, et PB est une séquence polymère vinylique ou diénique, différente de PA lorsque PA est aussi une séquence vinylique ou diénique, caractérisé par le fait que PA est issu du polymère de formule (I) de la revendication 1.

**11.** Procédé de fabrication du copolymère triséquencé selon la revendication 10, caractérisé par le fait qu'on conduit la polymérisation d'un monomère B en présence d'un polymère de formule (I), à une température de 50 à 160°C, pour obtenir le polymère de formule :

$$P_1-(S-D)_p-A-\underset{\underset{S}{\|}}{C}-S-PB-S-\underset{\underset{S}{\|}}{C}-A-(D-S)_p-P_1$$

où

$$P_1-(S-D)_p-A-\underset{\underset{S}{\|}}{C}-S = PA.$$

**12.** Copolymère biséquencé de formule :

$$-\!\!(PA-PB)_z\!\!-$$

dans laquelle PA et PB sont des séquences vinyliques ou diéniques différentes ou bien PA est une séquence polyoxyalkyklène, polyester ou polyamide, et PB une séquence vinylique ou diénique, PA étant issu du polymère de formule (II) de la revendication 1, z valant de 2 à 25.

**13.** Procédé de fabrication du copolymère biséquencé selon la revendication 10, caractérisé par le fait qu'on conduit la polymérisation d'un monomère B, en présence d'un polymère de formule (II), à une température de 50 à 160°C, pour obtenir le polymère de formule :

$$-\!\![-S-\underset{\underset{S}{\|}}{C}-A-[-\underset{\underset{S}{\|}}{C}-S-]_p-P_2-[-S-\underset{\underset{S}{\|}}{C}-]_p-A-\underset{\underset{S}{\|}}{C}-S-PB-]_z\; .$$

## Patentansprüche

**1.** Polymer, das mindestens eine Thioharnstoffdisulfidgruppierung in ihrer Hauptkette aufweist und durch die Formel:

$$[P_1-(S-D)_p-A-\underset{\underset{S}{\|}}{C}-S-]_2- \qquad (I);$$

oder

$$-[-S-\underset{\underset{S}{\|}}{C}-A-(-\underset{\underset{S}{\|}}{C}-S-)_p-P_2-(-S-\underset{\underset{S}{\|}}{C}-]_p-A-\underset{\underset{S}{\|}}{C}-S-]_n- \qquad (II)$$

wiedergegeben wird,
in der :

- $P_1$ und $P_2$ jeweils einen Polymerbereich, der aus mindestens einem unter den Vinyl- und Dien-Monomeren ausgewählten Monomeren hervorgeht, wobei p gleich 1 ist, oder aber einen Polymerbereich darstellen, der aus Polyoxyalkylen-, Polyester- oder Polyamidbereichen ausgewählt wird, wobei p gleich 0 ist;
- A :

(1) eine

$$-\underset{R_1}{\underset{|}{N}}-$$

Gruppe darstellt, dabei steht $R_1$ für eine verzweigte oder lineare Alkylgruppe, die gegebenenfalls mindestens ein Heteroatom und/oder mindestens eine

$$-\underset{R_2}{\underset{|}{N}}- \text{ oder } -\underset{R_3}{\underset{|}{N}}-R_4$$

Gruppe enthält ($R_2$, $R_3$ und $R_4$ stellen jeweils eine Alkyl-, Cycloalkyl- oder Arylgruppe dar) und besitzt gegebenenfalls mindestens eine funktionelle Gruppe;
diese Bedeutung (1) gilt für A in der Formel (I), außer wenn $P_1$ ein Polyamidbereich oder ein Polyesterbereich ist, der aus einem mit einer Säure- oder Esterfunktion terminierten Polyester hervorgegangen ist, sowie für die Formel (II), aber nur wenn $P_2$ einen Polyoxyalkylenbereich oder einen Polyesterbereich darstellt, der aus einem mit OH-Funktionen terminiertem Polyester hervorgeht ;
(2) eine

$$-\underset{E}{\underset{|}{N}}-G-\underset{J}{\underset{|}{N}}-$$

Gruppe darstellt, in der :

- G :
  - eine $(CR_5R_6)_a$-Gruppe darstellt, wobei $R_6$ und $R_6$ jeweils, unabhängig voneinander, Wasserstoff oder eine Alkylgruppe darstellen, die gegebenenfalls mindestens ein Heteroatom und/oder mindestens einen Rest

$$-\underset{R_7}{\underset{|}{N}}-$$

    beinhalten, dabei wird $R_7$ unter den Alkyl-, Cycloalkyl- und Arylgruppen ausgewählt, und a stellt eine Zahl zwischen 1 und 6 dar; oder
  - einen cycloaliphatischen Rest darstellt, der mindestens ein Heteroatom beinhalten kann ;
- E und J stellen, voneinander unabhängig, eine Alkylgruppe, die gegebenenfalls mindestens ein Heteroatom und/oder mindestens einen Rest

$$-\underset{R_8}{\underset{|}{N}}-$$

  beinhaltet, wobei $R_8$ unter den Alkyl-, Cycloalkyl- und Arylgruppen ausgewählt wird; eine Cycloalkylgruppe; eine Arylgruppe; -K-L, wobei K eine Einfachbindung darstellt; eine Alkylengruppe, die gegebenenfalls ein Heteroatom und/oder mindestens einen Rest

$$-\underset{R_9}{\underset{|}{N}}-$$

  beinhaltet, wobei $R_9$ unter den Alkyl-, Cycloalkyl und Arylgruppen ausgewählt wird; eine Cycloalkylengruppe; oder eine Arylengruppe dar und L stellt eine funktionelle Gruppe dar, jede der Gruppen E, J, $R_8$ und $R_9$ kann mindestens eine funktionelle Gruppe besitzen, E und J der

$$-\underset{E}{\underset{|}{N}}-G-\underset{J}{\underset{|}{N}}-$$

Gruppe können zur Ausbildung eines Stickstoffheterocyclus miteinander verbunden sein; die

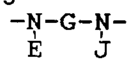

Gruppe kann ebenfalls:

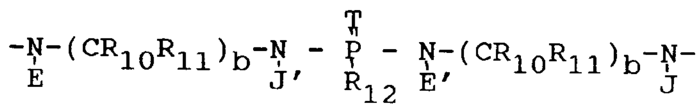

oder

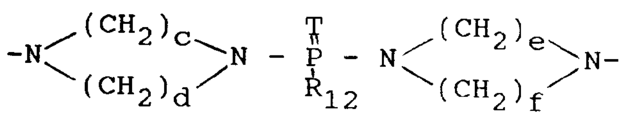

darstellen,
mit:

- b, das für eine ganze Zahl zwischen 1 bis 12 steht;
- $R_{10}$ und $R_{11}$, die jeweils, unabhängig voneinander, Wasserstoff oder einen $C_1$-$C_{12}$-Alkylrest darstellen, wobei der genannte Alkylrest gegebenenfalls mindestens ein Heteroatom und/oder mindestens einen Rest

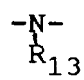

besitzt,
dabei wird $R_{13}$ unter den Alkyl-, Cycloalkyl- und Arylgruppen ausgewählt ;

- E' und J' mit jeweils den E und J entsprechenden Bedeutungen ;
- T, das für ein Sauerstoff- oder ein Schwefelatom steht, und =T kann fehlen ;
- $R_{12}$, das eine $C_1$-$C_{12}$-Alkyl- oder Alkoxygruppe, eine $C_3$-$C_{12}$-Cycloalkyl- oder Cycloalkoxygruppe, Aryl- oder Aryloxygruppe darstellt, diese Gruppen können substituiert sein ;
- c, d, e und f, die voneinander unabhängig eine ganze Zahl zwischen 1 und 3 darstellen ;
- g, das eine ganze Zahl zwischen 10 und 40 darstellt ;

(3) A kann in der Formel (I), wenn $P_1$ einen Vinyl- oder Dienbereich darstellt, ebenfalls einen Rest

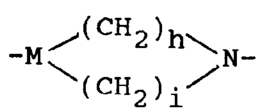

darstellen,
in dem :

- M, an D gebunden, -CH oder -C-Q-R darstellt, Q stellt eine Einfachbindung oder eine Alkylen-, Cycloalkylen- oder Arylengruppe dar und R steht für COOH, $COOR_{14}$ ($R_{14}$ steht für eine Alkyl-, Cycloalkyl- oder Arylgruppe), OH, eine phosphortragende Gruppe, -CN, oder einen Iminrest

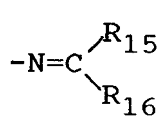

steht, mit $R_{15}$ und $R_{16}$, die jeweils voneinander unabhängig eine aromatische $C_6$-$C_{10}$-Gruppe,

eine cycloaliphatische $C_5$-$C_{10}$-Gruppe oder eine aliphatische $C_1$-$C_6$-Gruppe darstellen; und
- h und i stehen jeweils für eine ganze Zahl von 1 bis 3;
- D steht für eine Einfachbindung oder aber für eine Alkylen-, Cycloalkylen- oder Arylgruppe, D kann, wenn M für CH steht, nur eine Einfachbindung darstellen;
- n entspricht 1 bis 20.

2. Verfahren zur Herstellung des Polymeren der Formel (I) des Anspruchs 1, dabei steht $P_1$ für einen Polymerbereich, der aus mindestens einem Monomeren $M_1$ entstanden ist, das unter den Dien- und Vinyl-Monomeren ausgewählt wird, dadurch gekennzeichnet, daß :
   - man in einer ersten Verfahrensstufe die radikalische Polymerisation des Monomeren $M_1$, in Gegenwart von mindestens einem Radikalstarter und mindestens einem Übertragungsreagenz der Formel:

     HS-D-AH (III)

     oder

     $$HS\text{-}D\text{-}\overset{\oplus}{A}H_2X^{\ominus} \quad (III')$$

     darstellt,

     X steht für ein Halogen, und der Wasserstoff der sekundären endständigen Amingruppe kann durch eine Schutzgruppe ersetzt werden; dann,
   - in einer zweiten Verfahrensstufe, wenn nötig nach Wiederherstellung der sekundären Aminfunktion, beispielsweise durch Hydrolyse, läßt man das Polymer

     $P_1$-S-D-AH (IV)

     oder

     $$P_1\text{-}S\text{-}D\text{-}\overset{\oplus}{A}H_2X^{\ominus} \quad (IV'),$$

     aus der ersten Verfahrensstufe erhalten, mit Dischwefelkohlenstoff reagieren, und zwar in Gegenwart von mindestens einem Oxydationsmittel oder unter Zugabe dieses Reagenzes nach der Reaktion.

3. Polymere, durch die Formeln :

   $P_1$-S-D-AH (IV)

   oder

   $$P_1\text{-}S\text{-}D\text{-}\overset{\oplus}{A}H_2X^{\ominus} \quad (IV')$$

   wiedergegeben,
   in denen:
   - $P_1$ eine Vinyl- oder Diengruppierung darstellt; und
   - D und A Bedeutungen tragen, wie in Anspruch 1 definiert ; und
   - X für Halogen steht,

   dabei kann der Wasserstoff der endständigen sekundären Amingruppe durch eine Schutzgruppe ersetzt sein.

4. Verfahren zur Herstellung von Polymeren nach Anspruch 3, dadurch gekennzeichnet, daß man die Polymerisation des Vinyl- oder Dienmonomeren $M_1$ in Gegenwart von mindestens einem Radikalstarter und mindestens einem Übertragungsreagenz der Formel

   HS-D-AH (III)

   oder

   $$HS\text{-}D\text{-}\overset{\oplus}{A}H_2X^{\ominus} \quad (III')$$

   durchführt.

5. Verfahren zur Herstellung des Polymeren der Formel (II) des Anspruchs 1, dabei steht $P_2$ für einen aus mindestens einem unter den Vinyl- und Dienmonomeren ausgewählten Monomeren $M_2$ hervorgegangenen Polymerbereich, dadurch gekennzeichnet, daß:
   - man in einer ersten Verfahrensstufe eine Verbindung der Formel :

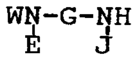 (V) oder 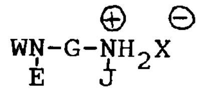 (V')

in der W eine Schutzgruppe ist, mit Dischwefelkohlenstoff reagieren läßt, und zwar in Gegenwart von mindestens einem Oxydationsmittel oder unter Zugabe dieses Reagenzes nach der Reaktion, dann hydrolysiert man das erhaltene Produkt, was zu der Verbindung der Formel:

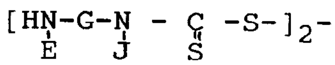 (VI)

führt;
   - man in einer zweiten Verfahrensstufe das Monomer $M_2$ in Gegenwart der Verbindung (VI) polymerisiert ; und
   - man in einer dritten Verfahrensstufe das in der zweiten Verfahrensstufe erhaltene Polymer mit Dischwefelkohlenstoff umsetzt, und zwar in Gegenwart von mindestens einem Oxydationsmittel oder unter Zugabe dieses Reagenzes nach der Reaktion.

6. Verfahren zur Herstellung des Polymeren der Formel (I), worin $P_1$ einen Polyoxyalkylenbereich oder einen Polyesterbereich, aus einem mit einer Alkoholfunktion terminierten Polyester hervorgegangen, darstellt, dadurch gekennzeichnet, daß:
   - man in einer ersten Verfahrensstufe ein Polymer $P_1$-OH mit einem Halogenisierungsreagenz umsetzt ;
   - man in einer zweiten Verfahrensstufe das erhaltene Polymere $P_1$-Hal mit einem Überschuß der Verbindung der Formel :

H-A-H (X) ;

oder

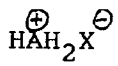 (X'),

wenn A die Bedeutung (1) besitzt ;
oder

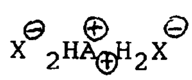 (X''),

wenn A die Bedeutung (2) besitzt,
umsetzt,
oder mit einer Verbindung der Formel (V) oder (V') umsetzt, in diesem Fall wird das erhaltene Produkt nach seiner Bildung hydrolysiert ;
   - man in einer dritten Verfahrensstufe das erhaltene Polymer $P_1$-AH mit dem Dischwefelkohlenstoff umsetzt, und zwar in Gegenwart von mindestens einem Oxydationsmittel oder unter Zugabe dieses Reagenzes nach der Reaktion.

7. Verfahren zur Herstellung des Polymeren der Formel (II) des Anspruchs 1, wobei $P_2$ einen Polyoxyalkylenbereich oder einen Polyesterbereich, aus einem mit einer Alkoholfunktion terminiertem Polyester stammend, wiedergibt, dadurch gekennzeichnet, daß :
   - man in einer ersten Verfahrensstufe ein Polymer HO-$P_2$-OH mit einem Halogenisierungsmittel umsetzt ;
   - man in einer zweiten Verfahrensstufe das erhaltene Produkt Hal-$P_2$-Hal mit einem Überschuß der

Verbindung (X) oder (X') oder (X") oder mit der Verbindung (V) oder (V') umsetzt, was gegebenenfalls nach Hydrolyse zum Polymeren der Formel HA-$P_2$-AH führt ; und

- man in einer dritten Verfahrensstufe das Polymer (XIV) mit dem Dischwefelkohlenstoff umsetzt, und zwar in Gegenwart von mindestens einem Oxydationsmittel oder unter Zugabe dieses Reagenzes nach seiner Bildung.

**8.** Verfahren zur Herstellung von einem Polymeren der Formel (I), in dem $P_1$ ein Polyamid- oder Polyesterbereich, aus einem mit einer Säure- oder Esterfunktion terminiertem Polyester stammend, ist, dadurch gekennzeichnet, daß man als Ausgangspolymer ein mit einer sekundären Aminfunktion terminiertes Polyamid oder aber ein Polyamid oder ein Polyester, mit einer Säure- oder Amidfunktion terminiert, auswählt, das man mit einem Überschuß der Verbindung (X) oder (X") oder mit einer Verbindung (V) oder (V') umsetzt, um gegebenenfalls nach Hydrolyse ein Polymer $P_1$-AH zu gewinnen, das man mit dem Dischwefelkohlenstoff in Gegenwart von mindestens einem Oxydationsmittel oder unter Zugabe dieses Reagenzes nach der Reaktion umsetzt.

**9.** Verfahren zur Herstellung von einem Polymeren der Formel (II), in dem $P_2$ einen Polyamid- oder Polyesterbereich, aus einem mit einer Säure- oder Esterfunktion terminiertem Polyester stammend, darstellt, dadurch gekennzeichnet, daß man die Säure- oder Esterendstellen des Ausgangspolyesters, und falls vorhanden die Säure- oder Esterendstellen des Ausgangspolyamids, durch Reaktion mit einem Überschuß der Verbindung (X) oder (X") oder mit einer Verbindung (V) oder (V') umwandelt, dabei steht A für

$$-\underset{E}{\underset{|}{N}}-G-\underset{J}{\underset{|}{N}}-,$$

um gegebenenfalls nach Hydrolyse ein Polymer HA-$P_2$-AH zu gewinnen, daß man mit dem Dischwefelkohlenstoff in Gegenwart von mindestens einem Oxydationsmittel oder unter Zugabe dieses Reagenzes nach der Reaktion umsetzt.

**10.** Copolymere mit drei Bereichen der Formel :

PA-PB-PA

in der PA einen Vinyl-, Dien-, Polyoxyalkylen-, Polyester- oder Polyamidbereich darstellt, und PB einen Vinyl- oder Dienbereich darstellt, der von PA verschieden ist, wenn PA ebenfalls einen Vinyl- oder Dienbereich darstellt, dadurch gekennzeichnet, daß PA aus einem Polymer der Formel (I) des Anspruches 1 hervorgeht.

**11.** Verfahren zur Herstellung des Copolymeren mit drei Bereichen nach Anspruch 10, dadurch gekennzeichnet, daß man die Polymerisation von einem Monomeren B in Gegenwart von einem Polymeren der Formel (I) bei einer Temperatur zwischen 50 und 160 °C durchführt, um das Polymer der Formel :

$$P_1-(S-D)_p-A-\underset{S}{\underset{\|}{C}}-S-PB-S-\underset{S}{\underset{\|}{C}}-A-(D-S)_p-P_1$$

zu erhalten,
in dem

$$P_1-(S-D)_p-A-\underset{S}{\underset{\|}{C}}-S \quad = \quad PA.$$

**12.** Copolymer mit zwei Bereichen der Formel :

$-(PA-PB)_z-$

in der PA und PB verschiedene Vinyl- oder Dienbereiche sind, oder aber PA einen Polyoxyalkylen-, Polyester- oder Polyamidbereich und PB einen Vinyl- oder Dienbereich darstellen, wobei PA aus einem Polymer der Formel (II) des Anspruches 1 hervorgeht, z zwischen 2 und 25 liegt.

**13.** Verfahren zur Herstellung des Copolymeren mit zwei Bereichen nach Anspruch 10, dadurch gekennzeichnet, daß man die Polymerisation von einem Monomeren B in Gegenwart von einem Polymeren der Formel (II) bei einer Temperatur zwischen 50 und 160°C durchführt, um das Polymer der Formel :

$$-(-S-\underset{\underset{S}{\|}}{C}-A-(-\underset{\underset{S}{\|}}{C}-S-)_p-P_2-(-S-\underset{\underset{S}{\|}}{C}-)_p-A-\underset{\underset{S}{\|}}{C}-S-PB-)_z-$$

zu gewinnnen.

## Claims

1. Polymer containing at least one thiuram disulphide group in its main chain and denoted by the formula:

$$[P_1-(S-D)_p-A-\underset{\underset{S}{\|}}{C}-S-]_2- \qquad (I);$$

or

$$-[-S-\underset{\underset{S}{\|}}{C}-A-[-\underset{\underset{S}{\|}}{C}-S-]_p-P_2-[-S-\underset{\underset{S}{\|}}{C}-]_p-A-\underset{\underset{S}{\|}}{C}-S]_n- \qquad (II)$$

where:
- each of $P_1$ and $P_2$ denotes a polymer block originating from at least one monomer chosen from vinyl and dienic monomers, in which case p has the value of 1, or else a polymer block chosen from polyoxyalkylene, polyester or polyamide blocks, in which case p has the value of 0;
- A denotes:
  (1) an

$$-\underset{\underset{R_1}{|}}{N}-$$

  residue, $R_1$ denoting a linear or branched alkyl group optionally comprising at least one heteroatom and/or at least one

$$-\underset{\underset{R_2}{|}}{N}-$$

  or

$$-\overset{\oplus}{\underset{\underset{R_3}{|}}{N}}-R_4$$

  residue, (each of $R_2$, $R_3$ and $R_4$ denoting an alkyl, cycloalkyl or aryl group) and optionally bearing at least one functional group;
  this meaning (1) of A being valid for the formula (I) except if $P_1$ is a polyamide block or a polyester block originating from a polyester terminated by an acidic or ester functional group, and for formula (II), but only if $P_2$ is a polyoxyalkylene block or a polyester block originating from a polyester terminated by OH functional groups;
  (2) an

$$-\underset{\underset{E}{|}}{N}-G-\underset{\underset{J}{|}}{N}-$$

residue, where:

- G denotes:

  a $-(CR_5R_6)_a-$ residue, with each of $R_6$ and $R_6$ denoting, independently of each other, hydrogen or an alkyl residue, which optionally comprises at least one heteroatom and/or at least one

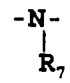

  residue, $R_7$ being chosen from alkyl, cycloalkyl and aryl groups, and a denoting an integer from 1 to 6; or

  the residue of an aliphatic ring which may contain at least one heteroatom;

- E and J denote, independently of each other, an alkyl group optionally comprising at least one heteroatom and/or at least one

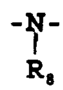

  residue, $R_6$ being chosen from alkyl, cycloalkyl and aryl groups; a cycloalkyl group; an aryl group; -K-L, K denoting a single bond; an alkylene group optionally comprising a heteroatom and/or at least one

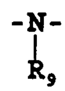

  residue, $R_9$ being chosen from alkyl, cycloalkyl or aryl residues; a cycloalkylene group; or an arylene group; and L denotes a functional group, it being possible for each of the groups E, J, $R_6$ and $R_9$ to bear at least one functional group, it being possible for E and J of the

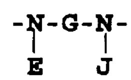

  group to be joined to form a nitrogenous heterocyclic ring; it being also possible for the

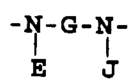

  group to denote:

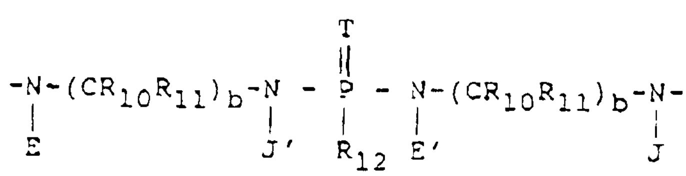

  or

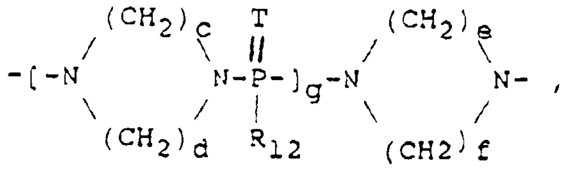

with:

- b denoting an integer from 1 to 12;
- each of $R_{10}$ and $R_{11}$ denoting, independently of each other, hydrogen or a $C_1$-$C_{12}$ alkyl residue, the said alkyl residue optionally comprising at least one heteroatom and/or at least one

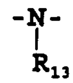

residue, $R_{13}$ being chosen from alkyl, cycloalkyl and aryl groups;
- E' and J' having the same meanings as E and J respectively;
- T denoting an oxygen or sulfur atom, and it being possible for =T to be absent;
- $R_{12}$ denoting a $C_1$-$C_{12}$ alkyl or alkoxy, $C_3$-$C_{12}$ cycloalkyl or cycloalkoxy, aryl or aryloxy group, it being possible for these groups to bear substituents;
- each of c, d, e and f independently denoting an integer from 1 to 3;
- g denoting an integer from 10 to 40;

(3) it being also possible, when $P_1$ denotes a vinyl or dienic block, for A to denote a

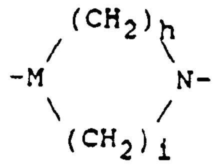

residue in formula (I)
where :
- M, joined to D, denotes

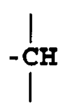 or 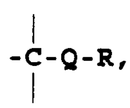

Q denoting a single bond or an alkylene, cycloalkylene or arylene groups and R denoting COOH, $COOR_{14}$ ($R_{14}$ denoting alkyl, cycloalkyl or aryl), OH, a phosphorus-containing group, -CN or an

-CN or an 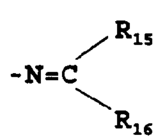

imine residue, with each of $R_{15}$ and $R_{16}$ independently denoting a $C_6$-$C_{10}$ aromatic group, a $C_5$-$C_{10}$ cycloaliphatic group or a $C_1$-$C_6$ aliphatic group; and
- each of h and i denoting an integer from 1 to 3;
- D denotes a single bond or else an alkylene, cycloalkylene or arylene group, it being possible for D to denote only a single bond in the case where M denotes CH;
- n has a value from 1 to 20.

**2.** Process for the preparation of the polymer of formula (I) of Claim 1, $P_1$ denoting a polymer block originating from at least one monomer $M_1$ chosen from vinyl and dienic monomers, characterized in that:

- in a first stage the radical polymerization of the monomer $M_1$ is conducted in the presence of at least one free-radical initiator and of at least one transfer agent of formula:

$$HS\text{-}D\text{-}A\text{-}H \qquad (III)$$

or

$$HS\text{-}D\text{-}\overset{\oplus}{A}H_2X^{\ominus} \qquad (III')$$

X denoting halogen, and it being possible for the hydrogen of the terminal secondary amine group to be replaced by a protective group; then

- in a second stage, if need be after regeneration of the secondary amine, for example by hydrolysis, the polymer

$$P_1\text{-}S\text{-}D\text{-}AH \qquad (III)$$

or

$$P_1\text{-}S\text{-}D\text{-}\overset{\oplus}{A}H_2X^{\ominus} \quad (IV')$$

obtained from the first stage is reacted with carbon disul- phide in the presence of at least one oxidizing agent or by adding this agent after the reaction.

**3.** Polymers denoted by the formula:

$$P_1\text{-}S\text{-}D\text{-}AH \qquad (IV)$$

or

$$P_1\text{-}S\text{-}D\text{-}\overset{\oplus}{A}H_2\overset{\ominus}{X} \qquad (IV')$$

in which:

- $P_1$ is a vinyl or dienic polymer block; and
- D and A being such as defined in Claim 1; and
- X denoting halogen,

it being possible for the hydrogen of the terminal secondary amine group to be replaced by a protective group.

**4.** Process for the preparation of the polymers according to Claim 3, characterized in that the polymerization of the vinyl or dienic monomer $M_1$ is conducted in the presence of at least one free-radical initiator and of at least one transfer agent of formula:

$$HS\text{-}D\text{-}AH \qquad (III)$$

or

$$HS\text{-}D\text{-}\overset{\oplus}{A}H_2\overset{\ominus}{X} \qquad (III').$$

**5.** Process for the preparation of the polymer of formula (II) of Claim 1, $P_2$ denoting a polymer block originating from at least one monomer $M_2$ chosen from vinyl and dienic monomers, characterized in that:

- in a first stage a compound of formula:

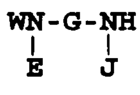 (V) or 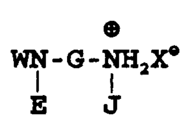 (V')

in which W is a protective group, is reacted with carbon disulphide in the presence of at least one

oxidizing agent or by adding this agent after the reaction, and the product obtained is then hydrolysed, which produces the compound of formula:

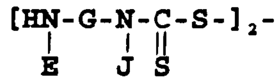 (VI);

- in a second stage the polymerization of monomer $M_2$ is conducted in the presence of compound (VI); and
- in a third stage the polymer obtained in the second stage is reacted with carbon disulphide in the presence of at least one oxidizing agent or by adding this agent after the reaction.

**6.** Process for the manufacture of the polymer of formula (I), $P_1$ denoting a polyoxyalkylene block or a polyester block originating from a polyester terminated by an alcohol functional group, characterized in that:
- in a first stage a polymer $P_1$-OH is reacted with a halogenating agent;
- in a second stage the polymer obtained $P_1$-Hal is reacted with an excess of the compound of formula:

  H-A-H (X);

  or

  $$H\overset{\oplus}{A}H_2X^{\ominus} \qquad (X')$$

  if A has the meaning (1),
  or

  $$X^{\ominus}{}_2H\overset{\oplus}{A}\cdot H_2X^{\ominus} \qquad (X'')$$

  if A has the meaning (2),
  or with a compound of formula (V) or (V') in which case the resulting product is hydrolysed after its formation;
- in a third stage the polymer obtained $P_1$-AH is reacted with carbon disulphide in the presence of at least one oxidizing agent or by adding this agent after the reaction.

**7.** Process for the manufacture of the polymer of formula (II) of Claim 1, $P_2$ denoting a polyoxyalkylene block or a polyester block originating from a polyester terminated by alcohol functional groups, characterized in that:
- in a first stage a polymer HO-$P_2$-OH is reacted with a halogenating agent;
- in a second stage the polymer obtained Hal-$P_2$-Hal is reacted with an excess of compound (X) or (X') or (X') or with the compound (V) or (V'), which produces, after hydrolysis if need be, the polymer of formula Ha-$P_2$-AH; and
- in a third stage, polymer (XIV) is reacted with carbon disulphide in the presence of at least one oxidizing agent or by adding this agent after its formation.

**8.** Process for the manufacture of a polymer of formula (I) where $P_1$ is a polyamide block or a polyester block originating from a polyester terminated by an acidic or ester functional group, characterized in that the starting polymer employed is a polyamide terminated by a secondary amine functional group or else a polyamide or a polyester terminated by an acidic or ester functional group, which is reacted with an excess of compound (X) or (X") or with a compound (V) or (V') to obtain, after hydrolysis if need be, a polymer $P_1$-AH, which is reacted with carbon disulphide in the presence of at least one oxidizing agent or by adding this agent after the reaction.

**9.** Process for the manufacture of a polymer of formula (II) where $P_2$ is a polyamide block or a polyester block originating from a polyester terminated by acidic or ester functional groups, characterized in that the acidic or ester ends of the starting polyester, and if appropriate the acidic or ester ends of the starting poly-amide, are converted by reaction with an excess of compound (X) or (X") or with a compound (V) or (V'), A denoting

$$-\underset{E}{\underset{|}{N}}-G-\underset{J}{\underset{|}{N}}-$$

to obtain, after hydrolysis if need be, a polymer $HA-P_2-AH$, which is reacted with carbon disulphide in the presence of at least one oxidizing agent or by adding this agent after the reaction.

**10.** Triblock copolymers of formula:

$$PA-PB-PA$$

characterized in that PA is a vinyl, dienic, polyoxyalkylene, polyester or polyamide block, and PB is a vinyl or dienic polymer block other than PA when PA is also a vinyl or dienic block, characterized in that PA originates from the polymer of formula (I) of Claim 1.

**11.** Process for the manufacture of the triblock copolymer according to Claim 10, characterized in that the polymerization of a monomer B is conducted in the presence of a polymer of formula (I) at a temperature of 50 to 160°C to obtain the polymer of formula:

$$P_1-(S-D)_p-A-\underset{S}{\underset{\|}{C}}-S-PB-S-\underset{S}{\underset{\|}{C}}-A-(D-S)_p-P_1$$

where

$$P_1-(S-D)_p-A-\underset{S.}{\underset{\|}{C}}-S = PA.$$

**12.** Diblock copolymer of formula:

$$-\!\!\left(PA-PB\right)\!\!_z-$$

characterized in that PA and PB are different vinyl or dienic blocks or else PA is a polyoxyalkylene, polyester or polyamide block and PB a vinyl or dienic block, PA originating from the polymer of formula (II) of Claim 1, z having a value from 2 to 25.

**13.** Process for the manufacture of the diblock copolymer according to Claim 10, characterized in that the polymerization of a monomer B is conducted in the presence of a polymer of formula (II) at a temperature of 50 to 160°C, to obtain the polymer of formula:

$$-\!\!\left(S-\underset{S}{\underset{\|}{C}}-A-\left(\underset{S}{\underset{\|}{C}}-S\right)_p-P_2-\left(S-\underset{S}{\underset{\|}{C}}\right)_p-A-\underset{S}{\underset{\|}{C}}-S-PB\right)\!\!_z .$$